(19) Europäisches Patentamt
European Patent Office
Office européen des brevets

(11) **EP 4 184 807 A1**

(12) **EUROPEAN PATENT APPLICATION**
published in accordance with Art. 153(4) EPC

(43) Date of publication:
**24.05.2023 Bulletin 2023/21**

(21) Application number: **21849990.3**

(22) Date of filing: **06.07.2021**

(51) International Patent Classification (IPC):
**H04B 7/185** (2006.01)          **H04B 7/0456** (2017.01)

(52) Cooperative Patent Classification (CPC):
**H04B 7/0456; H04B 7/185**

(86) International application number:
**PCT/CN2021/104620**

(87) International publication number:
**WO 2022/022238 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.07.2020 CN 202010732077**

(71) Applicant: **Huawei Technologies Co., Ltd.
Longgang
Shenzhen, Guangdong 518129 (CN)**

(72) Inventors:
• **CHEN, Ying
Shenzhen, Guangdong 518129 (CN)**

• **JIANG, Zhenjun
Shenzhen, Guangdong 518129 (CN)**
• **KONG, Chuili
Shenzhen, Guangdong 518129 (CN)**
• **LUO, Hejia
Shenzhen, Guangdong 518129 (CN)**
• **LI, Rong
Shenzhen, Guangdong 518129 (CN)**
• **WANG, Jun
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD FOR PRECODING IN SATELLITE COMMUNICATION SYSTEM, AND COMMUNICATION APPARATUS**

(57) This application provides a precoding method and a communication apparatus in a satellite communication system. Considering that a satellite communication channel is mainly affected by a large-scale channel, and the large-scale channel is mainly determined by a free path loss, a network device performs precoding based on the large-scale channel by using an open-loop or closed-loop precoding technology. Therefore, unnecessary channel measurement of a terminal device can be reduced, a good performance gain can be obtained, and precoding performance of the satellite communication system can be improved.

**EP 4 184 807 A1**

200

A network device reads, based on a target beam, an element associated with the target beam from one or more basic channel matrices, and generates one or more target channel matrices, where the one or more basic channel matrices are obtained through calculation based on large-scale channel information — 210

The network device generates a precoding matrix based on the one or more target channel matrices, and precodes, based on the precoding matrix, a downlink signal corresponding to the target beam — 220

Send the precoded downlink signal — 230

**FIG. 3**

## Description

This application claims priority to Chinese Patent Application No. 202010732077.3, filed with the China National Intellectual Property Administration on July 27, 2020 and entitled "PRECODING METHOD AND COMMUNICATION APPARATUS IN SATELLITE COMMUNICATION SYSTEM", which is incorporated herein by reference in its entirety.

## TECHNICAL FIELD

This application relates to satellite communication, and more specifically, to a precoding method and a communication apparatus in a satellite communication system.

## BACKGROUND

Compared with terrestrial communication, satellite communication has unique advantages. For example, satellite communication can provide a wider coverage area, a satellite base station is not vulnerable to external damage caused by natural disasters, more data transmission resources are provided for 5th generation (5th generation, 5G) communication, a better communication service is provided, and a network rate can be improved. Therefore, supporting both terrestrial and satellite communication is an inevitable trend of future 5G communication. This has great benefits in wide coverage, reliability, multi-connection, and high throughput.

At present, a satellite communication system uses a multi-antenna technology to improve system throughput, but this also introduces new challenges. In multi-beam satellite communication, user information is transmitted by a plurality of antennas of a satellite transmitter and transmitted through multi-beam transmission. Inter-beam interference is generated due to overlapping between beams. An efficient interference suppression technology is a precoding technology, and is a generalization of a beamforming technology. As an efficient compensation method, the precoding technology is widely used in a terrestrial communication field. In a terrestrial communication system, a terminal device estimates channel information at a current moment by frequently measuring a downlink reference signal from a network side, and feeds back the channel information to a base station, to implement precoding of a downlink signal.

However, compared with a terrestrial communication system, a satellite communication system has a long communication distance, and a ground round-trip delay is also large, and usually may even reach dozens or even hundreds of milliseconds. However, a round-trip delay of the terrestrial communication system is usually within 1 millisecond. Therefore, in a multi-beam satellite communication system, if a precoding procedure of the terrestrial communication system is directly used, a serious channel information expiration problem exists. On this basis, the terminal device frequently measures a channel, and precoding performance cannot be improved.

## SUMMARY

This application provides a precoding method and a communication apparatus in a satellite communication system, to improve precoding performance of the satellite communication system.

According to a first aspect, a precoding method in a satellite communication system is provided, and is executed by a network device. The method includes: reading, based on a target beam, an element associated with the target beam from one or more basic channel matrices, and generating one or more target channel matrices, where the target beam is a beam that needs to be precoded, and the one or more basic channel matrices are obtained through calculation based on large-scale channel information; generating a precoding matrix based on the one or more target channel matrices, and precoding, by using the precoding matrix, a downlink signal corresponding to the target beam; and sending the precoded downlink signal.

In the technical solutions of this application, the basic channel matrix is calculated based on the large-scale channel information, and then an element associated with a precoded target beam is read from the basic channel matrix, to obtain the target channel matrix used to generate the precoding matrix. The inventor of this application finds through research that a channel of satellite communication is mainly based on a large-scale channel. Therefore, precoding performance of the satellite communication system can be improved by applying the large-scale channel information to precoding.

In addition, because the large-scale channel information is used for precoding, unnecessary channel measurement on a terminal side can be reduced, and complexity on the terminal side is lower.

In addition, the network device stores one or more basic channel matrices offline.

With reference to the first aspect, in some implementations of the first aspect, there is one basic channel matrix. The basic channel matrix includes elements in K rows and K columns. The basic channel matrix may be used for precoding of K beams. The K rows of the basic channel matrix respectively correspond to channels of a terminal device in the K beams. An element $h_{kk}$ in the basic channel matrix represents a channel through which a wanted signal that needs to be received by a $k^{th}$ terminal device on a $k^{th}$ beam passes. $h_{ki}$ represents a channel through which an interference signal generated by an $i^{th}$ beam for a terminal device in the $k^{th}$ beam passes. $1 \leq i \leq K$, $1 \leq k \leq K$, k and i are integers, K is a positive integer, and i is not equal to k.

With reference to the first aspect, in some implementations of the first aspect, the target channel matrix that includes elements associated with $K_1$ target beams and that is read from the basic channel matrix is included in a target channel matrix that includes elements associated with $K_2$ target beams and that is read from the basic channel matrix. The $K_2$ target beams include the $K_1$ target beams. $K_1 < K_2 \leq K$. $K_1$ and $K_2$ are integers.

It should be understood that the foregoing characteristics of the basic channel matrix indicate that the basic channel matrix provided in this application has a nesting feature (or an including feature). The target channel matrix can be obtained by storing a basic channel matrix and selecting a corresponding element from the basic channel matrix. Basic channel matrices of various scales do not need to be stored, thereby reducing storage complexity of a channel matrix.

With reference to the first aspect, in some implementations of the first aspect, when the K beams use a same frequency band, the reading, based on a target beam, an element associated with the target beam from one or more basic channel matrices, and generating one or more target channel matrices includes: reading, from the basic channel matrix based on IDs of L target beams, elements associated with the L target beams, to obtain a target channel matrix. The elements associated with the target beam include elements in L columns corresponding to the IDs of the L target beams and in L rows corresponding to the IDs of the L target beams in the basic channel matrix. $L \geq 1$, and L is an integer.

In a monochromatic multiplexing scenario, a nesting feature of a monochromatic basic channel matrix enables a network side to store only one basic channel matrix. During precoding, basic channel matrices of other sizes may be read from the stored basic channel matrix, thereby reducing complexity of storing the basic channel matrix by the network side.

With reference to the first aspect, in some implementations of the first aspect, there are N basic channel matrices. The N basic channel matrices may be used to precode K beams. When the K beams use N frequency bands, each of the N basic channel matrices corresponds to one frequency band of the N frequency bands. Sizes of the N basic channel matrices are all K rows and K columns. K is a positive integer.

The reading, based on a target beam, an element associated with the target beam from one or more basic channel matrices, and generating one or more target channel matrices includes:
reading, from a basic channel matrix corresponding to each frequency band based on IDs of L target beams, an element associated with a target beam of the frequency band, to obtain a target channel matrix corresponding to the frequency band. The element associated with the target beam includes elements in P rows and P columns corresponding to IDs of P target beams in the basic channel matrix corresponding to each frequency band. $1 \leq P < L$, $L \geq 2$, and P and L are integers.

It should be understood that, assuming that there are L target beams in total, a total quantity of target beams respectively corresponding to the N frequency bands should be L. P is an example of a quantity of target beams corresponding to a frequency band.

In this manner, a beam is not always allocated to a frequency band. Therefore, different frequency bands can be flexibly allocated to different beams. When precoding is performed on beams in a same frequency band, a target channel matrix needs to be read from a corresponding basic channel matrix, and then the target channel matrix is used to generate the precoding matrix.

With reference to the first aspect, in some implementations of the first aspect, there are N basic channel matrices. The N basic channel matrices may be used to precode K beams. When the K beams use N frequency bands, the N basic channel matrices respectively correspond to the N frequency bands. A size of a basic channel matrix corresponding to each frequency band of the N frequency bands is related to a quantity of beams of the frequency band. $N > 2$, and N is an integer.

The reading, based on a target beam, an element associated with the target beam from one or more basic channel matrices, and generating one or more target channel matrices includes:
separately reading, from the N basic channel matrices corresponding to the N frequency bands based on IDs of L target beams, an element associated with a corresponding target beam, to obtain N target channel matrices. The N target channel matrices correspond to the N frequency bands. Each frequency band of the N frequency bands corresponds to some of the L target beams. A sum of quantities of target beams corresponding to the N frequency bands is L.

With reference to the first aspect, in some implementations of the first aspect, when the K beams use N frequency bands, each frequency band corresponds to some of the K beams. $N \geq 2$, and N is an integer.

The reading, based on a target beam, an element associated with the target beam from one or more basic channel matrices, and generating one or more target channel matrices includes:
separately reading, from the basic channel matrix, an element associated with a target beam corresponding to each of the N frequency bands, to obtain N target channel matrices. The N target channel matrices correspond to the N frequency bands. The element associated with the target beam corresponding to each frequency band includes an element in a row corresponding to an ID of the target beam corresponding to the frequency band in the basic channel matrix and in a column corresponding to the ID of the target beam.

In a multi-color multiplexing scenario, a target channel matrix including beams of a same color is obtained from the basic channel matrix. On the basis of multi-color multiplexing, precoding is further performed, so that interference between beams of a same color can be reduced, and system throughput can be improved.

In the foregoing open-loop-based precoding schemes, a large-scale model is used to construct a channel matrix used for precoding, so that the terminal device can be prevented from performing unnecessary channel measurement. Signaling overheads introduced by a closed loop are reduced, and complexity on a terminal device side is reduced.

With reference to the first aspect, in some implementations of the first aspect, the element in the one or more basic channel matrices is calculated based on a reference point of a beam.

Before the reading, based on a target beam, an element associated with the target beam from one or more basic channel matrices, and generating one or more target channel matrices, the method further includes:

receiving first feedback information from the terminal device in the M first beams, where the first feedback information indicates the evaluation parameter of the large-scale channel information, M ≥ 1, and M is an integer;

determining, based on the evaluation parameter of the large-scale channel information, an element associated with the M first beams in the one or more basic channel matrices, where the element associated with the M first beams comprises an element whose row index is an ID of any first beam in the M first beams and/or whose column index is an ID of any first beam in the M first beams in the one or more basic channel matrices; and

outputting the one or more basic channel matrices.

For example, in some embodiments, that the network device determines, based on the evaluation parameter of the large-scale channel information, an element associated with the M first beams in the one or more basic channel matrices includes: The network device corrects, based on the evaluation parameter of the large-scale channel information, the element associated with the M first beams in the one or more basic channel matrices. The element in the one or more basic channel matrices before correction is calculated based on a reference point of a beam.

In some other examples, the network device may directly calculate, based on the evaluation parameter of the large-scale channel information, the element associated with the M first beams in the one or more basic channel matrices. The evaluation parameter of the large-scale channel information includes an actual geographical location of the terminal device during communication.

With reference to the first aspect, in some implementations of the first aspect, the element in the one or more basic channel matrices is calculated based on the reference point of the beam.

Before the reading, based on a target beam, an element associated with the target beam from one or more basic channel matrices, and generating one or more target channel matrices, the method further includes:

receiving first feedback information from the terminal device in the M first beams, where the first feedback information indicates the evaluation parameter of the large-scale channel information, M ≥ 1, and M is an integer; and

correcting, based on the evaluation parameter of the large-scale channel information, the element associated with the M first beams in the one or more basic channel matrices, to obtain the one or more corrected basic channel matrices. The element associated with the M first beams includes an element whose row index comprises the ID of the any first beam in the M first beams and/or whose column index comprises the ID of the any first beam in the M first beams in the one or more basic channel matrices.

In addition, the reading, based on a target beam, an element associated with the target beam from one or more basic channel matrices, and generating one or more target channel matrices includes:

reading, based on the target beam, the element associated with the target beam from the corrected one or more basic channel matrices, and generating the one or more target channel matrices.

In this embodiment, a closed-loop mechanism is introduced for precoding. Specifically, the network device stores the basic channel matrix offline in an open-loop manner. Subsequently, the network device receives the evaluation parameter of the large-scale channel information from the terminal device, corrects the element of the stored basic channel matrix based on the evaluation parameter of the large-scale channel information, obtains the target channel matrix based on the corrected basic channel matrix, and calculates the precoding matrix. This improves accuracy of channel estimation on the network side, and improves precoding performance.

In addition, although the closed-loop mechanism is introduced in this embodiment, the terminal device only needs to report a simple evaluation parameter of the large-scale channel information, for example, a location and an angle of the terminal device, and does not need to accurately measure a channel. Compared with a normal channel measurement and channel information reporting procedure, complexity and resource overheads can still be effectively reduced.

With reference to the first aspect, in some implementations of the first aspect, the method further includes: selecting the one or more basic channel matrices from prestored channel matrices based on satellite information. The prestored channel matrices are obtained through calculation based on the large-scale channel information. The satellite information includes one or more of a type, a communication elevation angle, and an orbit height of a satellite.

With reference to the first aspect, in some implementations of the first aspect, the method further includes:

receiving second feedback information from the terminal device in one or more second beams, where the second feedback information indicates an evaluation parameter of large-scale channel information; and
calculating the one or more basic channel matrices based on the evaluation parameter of the large-scale channel information through online calculation or table lookup. In the table lookup manner, there is a correspondence between the evaluation parameter of the large-scale channel information and channel information of the basic channel matrix. The one or more basic channel matrices are obtained based on the correspondence and the evaluation parameter of the large-scale channel information that is indicated by the second feedback information.

Compared with an implementation in which the network device or the terminal device stores the basic channel matrix offline, offline storage is not performed in this embodiment, but some calculation overheads are introduced. Due to different types of satellites, communication elevation angles, and the like, if corresponding basic channel matrices are separately stored, storage overheads are also large. In this embodiment, the terminal device simply feeds back the evaluation parameter of the large-scale channel information, to assist the network device in calculating the channel matrix online. This closed-loop mechanism can improve channel estimation precision, and can also avoid a large quantity of storage overheads.

In addition, in a table lookup manner, the network device can reduce some calculation overheads by using simple table storage. Therefore, in this embodiment, a compromise between calculation complexity and the storage overheads can be obtained.

The first feedback information and the second feedback information in the foregoing embodiment are examples of feedback information. Optionally, the first feedback information and the second feedback information may be the same.

With reference to the first aspect, in some implementations of the first aspect, the method further includes: receiving a correction coefficient from the terminal device. The correction coefficient is related to a moving speed of the terminal device.

The calculating the one or more basic channel matrices based on the evaluation parameter used for large-scale channel information through online calculation or table lookup includes: calculating the one or more basic channel matrices through online calculation or table lookup based on the evaluation parameter of the large-scale channel information and the correction coefficient.

In this embodiment, the terminal device reports the correction coefficient based on a moving speed of the terminal device, to avoid a problem that the evaluation parameter of the large-scale related channel information reported by the terminal device expires because the moving speed of the terminal device is high. The network device can obtain, based on the evaluation parameter and the correction coefficient that are fed back by a user, channel information when a satellite sends the downlink signal, and can obtain higher precision and better performance.

With reference to the first aspect, in some implementations of the first aspect, the evaluation parameter of the large-scale channel information includes one or more of a location parameter, an angle parameter, and a channel information parameter of the terminal device.

With reference to the first aspect, in some implementations of the first aspect, the receiving a correction coefficient from the terminal device includes: receiving one or more indication parameters from the terminal device. There is a correspondence between the one or more indication parameters and a value of the correction coefficient, or the one or more indication parameters are used to calculate the correction coefficient.

The method further includes: determining the correction coefficient through table lookup based on the one or more indication parameters and the correspondence, or obtaining the correction coefficient through calculation based on the one or more indication parameters.

According to a second aspect, a precoding method in a satellite communication system is provided, where the method includes:

A terminal device obtains an evaluation parameter of large-scale channel information, where the terminal device is located in a first beam, the first beam belongs to one of target beams, and the target beam is a beam on which a network device performs precoding; and the terminal device sends feedback information to the network device. The feedback information indicates an evaluation parameter of the large-scale channel information. The evaluation parameter of the large-scale channel information is used by the network device to determine an element associated with the first beam in one or more basic channel matrices.

The element associated with the first beam in the one or more basic channel matrices includes an element whose row index is an ID of the first beam and/or whose column index is an ID of the first beam in the one or more basic channel matrices.

For example, in an implementation, the terminal device sends the feedback information to the network device. The evaluation parameter of the large-scale channel information indicated by the feedback information is used by the network device to correct the element associated with the first beam in the one or more basic channel matrices that are stored offline, to obtain the one or more corrected basic channel matrices. The one or more basic channel matrices before correction are obtained through calculation based on a reference point of a beam.

In another implementation, the terminal device sends the feedback information to the network device. The evaluation parameter of the large-scale channel information indicated by the feedback information is used by the network device to obtain the one or more basic channel matrices through online calculation or table lookup. In this embodiment, the evaluation parameter of the large-scale channel information includes an actual geographical location of the terminal device during communication.

With reference to the second aspect, in some implementations of the second aspect, the method further includes:

The terminal device sends a correction coefficient to the network device. The correction coefficient is related to a moving speed of the terminal device. The correction coefficient is used by the network device to calculate the one or more basic channel matrices.

In this embodiment, the network device calculates the one or more basic channel matrices based on the evaluation parameter of the large-scale channel information and the correction coefficient. In other words, when calculating the one or more basic channel matrices based on the evaluation parameter of the large-scale channel information, the network device considers the correction coefficient, that is, considers the moving speed of the terminal device.

With reference to the second aspect, in some implementations of the second aspect, the evaluation parameter of the large-scale channel information includes one or more of a location parameter, an angle parameter, and a channel information parameter of the terminal device.

With reference to the second aspect, in some implementations of the second aspect, that the terminal device sends a correction coefficient to the network device includes:

The terminal device sends one or more indication parameters to the network device. There is a correspondence between the one or more indication parameters and a value of the correction coefficient, or the one or more indication parameters are used to calculate the correction coefficient. The one or more correction coefficients are used by the network device to determine the correction coefficient.

For beneficial technical effects of the method in the second aspect or any possible implementation of the second aspect, refer to a corresponding solution in the first aspect. Details are not described again.

According to a third aspect, a communication apparatus is provided. The communication apparatus has a function of implementing the method according to any one of the first aspect or the possible implementations of the first aspect. The function may be implemented by hardware, or may be implemented by hardware executing corresponding software. The hardware or the software includes one or more units corresponding to the foregoing functions.

According to a fourth aspect, this application provides a communication apparatus, and the communication apparatus has a function of implementing a function of the method according to the second aspect and any possible implementation of the second aspect. The function may be implemented by hardware, or may be implemented by hardware executing corresponding software. The hardware or the software includes one or more units corresponding to the foregoing functions.

According to a fifth aspect, this application provides a communication apparatus, including at least one processor. The at least one processor is coupled to at least one memory. The at least one processor is configured to execute a computer program or instructions stored in the at least one memory, so that the communication apparatus performs the method in any one of the first aspect or the possible implementations of the first aspect.

According to a sixth aspect, this application provides a communication apparatus, including at least one processor. The at least one processor is coupled to at least one memory. The at least one processor is configured to execute a computer program or instructions stored in the at least one memory, so that the communication apparatus performs the method in any one of the second aspect or the possible implementations of the second aspect.

According to a seventh aspect, this application provides a communication device, including a processor, a memory, and a transceiver. The memory is configured to store a computer program. The processor is configured to invoke and run the computer program stored in the memory, and control the transceiver to send/receive a signal, so that the communication device performs the method in the first aspect or any possible implementation of the first aspect.

According to an eighth aspect, this application provides a communication device, including a processor, a memory, and a transceiver. The memory is configured to store a computer program. The processor is configured to invoke and run the computer program stored in the memory, and control the transceiver to send/receive a signal, so that the communication device performs the method in the second aspect or any possible implementation of the second aspect.

According to a ninth aspect, this application provides a communication apparatus, including a processor and a communication interface. The communication interface is configured to receive a signal and transmit the received signal to the processor. The processor processes the signal, so that the communication apparatus performs the method in any one of the first aspect or the possible implementations of the first aspect.

According to a tenth aspect, this application provides a communication apparatus, including a processor and a communication interface. The communication interface is configured to receive a signal and transmit the received signal to the processor. The processor processes the signal, so that the communication apparatus performs the method in any one of the second aspect or the possible implementations of the second aspect.

Optionally, the communication interface may be an interface circuit, an input/output interface, or the like. The processor may be a processing circuit, a logic circuit, or the like.

Optionally, the communication apparatus according to the ninth aspect or the tenth aspect may be a chip or an integrated circuit.

According to an eleventh aspect, this application provides a computer-readable storage medium. The computer-readable storage medium stores computer instructions. When the computer instructions are run on a computer, the method according to any one of the first aspect or the possible implementations of the first aspect is performed.

According to a twelfth aspect, this application provides a computer-readable storage medium. The computer-readable storage medium stores computer instructions. When the computer instructions are run on a computer, the method according to any one of the second aspect or the possible implementations of the second aspect is performed.

According to a thirteenth aspect, this application provides a computer program product. The computer program product includes computer program code. When the computer program code is run on a computer, the method according to any one of the first aspect or the possible implementations of the first aspect is performed.

According to a fourteenth aspect, this application provides a computer program product. The computer program product includes computer program code. When the computer program code is run on a computer, the method according to any one of the second aspect or the possible implementations of the second aspect is performed.

According to a fifteenth aspect, this application provides a wireless communication system, including the communication device according to the seventh aspect and/or the communication device according to the eighth aspect.

**BRIEF DESCRIPTION OF DRAWINGS**

FIG. 1 is a schematic diagram of a multi-beam satellite communication system applicable to an embodiment of this application;

FIG. 2 is an example of a typical application scenario of a satellite network applicable to an embodiment of this application;

FIG. 3 is a flowchart of an open-loop-based precoding method according to this application;

FIG. 4 is a schematic diagram of beams corresponding to elements in a channel matrix;

FIG. 5 is an example of reading a target channel matrix from a basic channel matrix according to this application;

FIG. 6 is an example of an open-loop-based precoding procedure according to this application;

FIG. 7 is an example of cell distribution of multi-color multiplexing;

FIG. 8 is a schematic diagram of reading a target channel matrix from a basic channel matrix in a multi-color multiplexing scenario;

FIG. 9 is an example of a precoding procedure on a network side in a multi-color multiplexing scenario according to this application;

FIG. 10 is a schematic diagram in which a network device corrects a basic channel matrix based on a closed-loop mechanism;

FIG. 11 is an example of correcting a basic channel matrix based on a closed-loop manner;

FIG. 12 is a schematic diagram of a change between a location of a terminal device and an angle of a reference point of a beam relative to a serving satellite;

FIG. 13 is an example of a closed-loop-based precoding procedure according to this application;

FIG. 14 is a schematic diagram of calculating a target channel matrix online according to this application;

FIG. 15 is an example of a precoding procedure based on table lookup or online calculation on a network side;

FIG. 16 is a schematic diagram of a procedure of applying a correction coefficient to precoding according to this application;

FIG. 17 shows performance comparison between precoding performed by using small-scale channel information and precoding performed by using large-scale channel information in this application;

FIG. 18 is a schematic block diagram of a communication apparatus according to this application;

FIG. 19 is a schematic block diagram of another communication apparatus according to this application;

FIG. 20 is a schematic diagram of a structure of a communication apparatus according to this application; and

FIG. 21 is a schematic diagram of a structure of another communication apparatus according to this application.

## DESCRIPTION OF EMBODIMENTS

The following describes technical solutions of this application with reference to accompanying drawings.

The technical solutions of this application may be applied to a non-terrestrial network (non-terrestrial network, NTN) system such as a satellite communication system, high-altitude platform (high altitude platform station, HAPS) communication, air-to-ground (air-to-ground, A2G) communication, and an uncrewed aerial vehicle (Unmanned Aerial Vehicle, UAV). For example, the technical solutions may be applied to an integrated communication and navigation (integrated communication and navigation, ICaN) system, a global navigation satellite system (global navigation satellite system, GNSS), and the like.

The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th Generation, 5G) communication system (for example, a new radio (new radio, NR) system), or a mobile communication system in the future.

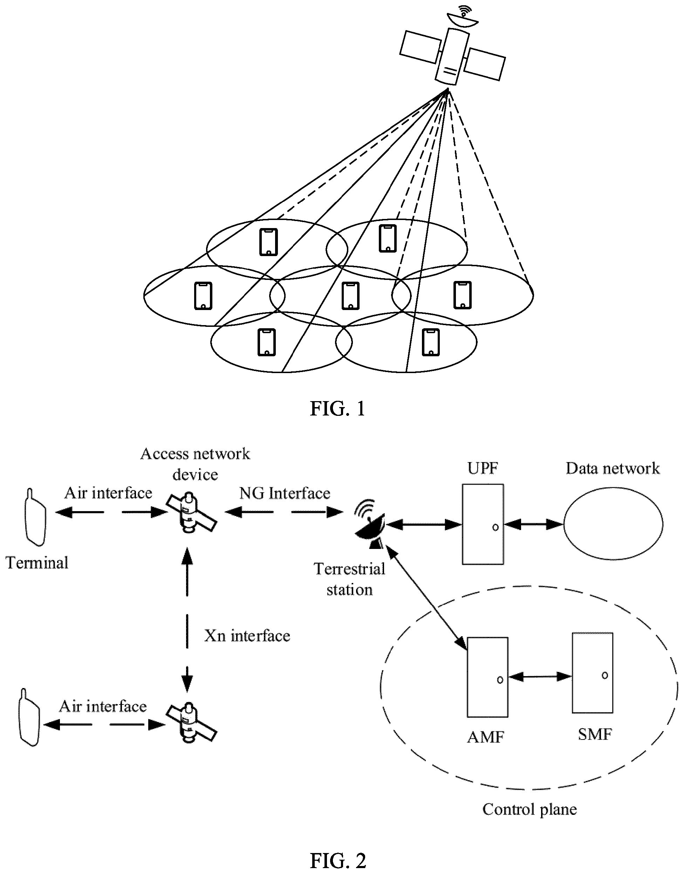

FIG. 1 is a schematic diagram of a multi-beam satellite communication system applicable to an embodiment of this application. Satellite base stations are classified into ground orbit, medium orbit, and high orbit based on their heights. A high earth orbit satellite is usually geostationary, and one or a few high earth orbit satellites may provide communication for a fixed area. A medium earth orbit satellite and a low earth orbit satellite have their own moving tracks, and usually require a plurality of satellites to collaborate to provide communication for a fixed area. At present, a satellite communication system improves system throughput by using a multi-antenna technology. In multi-beam satellite communication, user information is transmitted by a plurality of antennas of a satellite transmitter, and finally reaches a ground terminal through a plurality of beams. This is shown in FIG. 1. However, in a radio signal transmission process, inter-beam interference is generated due to overlapping between beams. To resolve this problem, a multi-beam satellite communication system may suppress interference by using a high frequency multiplexing factor, to ensure communication service quality of an edge user of each beam. Although the high frequency multiplexing factor can effectively suppress the inter-beam interference, it also reduces spectral efficiency of the satellite system. Therefore, a full-frequency multiplexing scheme is introduced into the multi-beam satellite communication system. In this method, all beams are transmitted through a same frequency band, so that frequency band utilization of the system is maximized. However, resulting inter-beam interference is more serious.

A precoding technology is an efficient interference suppression technology, and is a generalization of a beamforming technology. As an efficient compensation method, the precoding technology is widely used in a terrestrial communication field. However, compared with a terrestrial communication system, a major problem encountered by the precoding technology in the multi-beam satellite communication system is that a communication distance of the satellite communication system is long (a round-trip delay is even hundreds of milliseconds), and a round-trip delay of the terrestrial communication system is usually within 1 millisecond. Therefore, in the multi-beam satellite communication system, if a precoding procedure of the terrestrial communication system is directly used, a serious channel information expiration problem exists. Frequent channel measurement by the terminal device cannot improve precoding performance, and also introduces unnecessary complexity.

The inventor of this application finds through research that a channel of satellite communication is mainly a large-scale channel, and the large-scale channel is mainly determined by a free path loss. Specifically, a main difference between precoding and terrestrial multiple-input multiple-output (multiple input multiple out, MIMO) in the multi-beam satellite communication system lies in a channel model. The channel model of the satellite communication system includes a large-scale model and small-scale fading. The large-scale model includes an antenna gain, a path loss, atmospheric attenuation, shadow attenuation, and the like. Small-scale fading is similar to a conventional terrestrial channel and is caused by multipath fading. In the low-orbit satellite scenario, movement of the satellite introduces a large Doppler shift. Because a distance between the satellite and the terminal device is long, a path loss may reach nearly 200 dB. Therefore, the large-scale model is a main channel model of the satellite communication system, and a path loss in the large-scale model is a main loss source. The path loss includes a basic loss, an atmospheric loss, scintillation fading of the ionosphere or the troposphere, and the like. The basic loss includes free space path loss, clutter loss, and shadow fading. A simplest model of the path loss can be degraded to the free space path loss.

Therefore, this application provides that precoding is performed based on the large-scale channel in the satellite communication system. A research result shows that in the satellite communication system, precoding based on the large-scale channels can not only reduce unnecessary channel measurements, but also improve precoding performance.

The following describes the technical solutions of this application.

FIG. 2 is an example of a typical application scenario of a satellite network applicable to an embodiment of this application. FIG. 2 is a typical satellite network application architecture. A terrestrial mobile terminal accesses a network through an air interface (the air interface may be various types of air interfaces, for example, a 5G air interface). An access network device may be deployed on a satellite, or deployed on the ground, and is connected to a core network on the ground through a radio link. In addition, there are radio links between satellites to implement signaling exchange and user data transmission between access network devices. Network elements in FIG. 2 and their interfaces are described as follows.

A terminal device is a mobile device that supports new radio. The terminal device can access a satellite network through an air interface to initiate calls, access the Internet, and the like.

An access network device mainly provides radio access services, schedules radio resources to an access terminal, and provides reliable wireless transmission protocols and data encryption protocols.

A core network provides services such as user access control, mobility management, session management, user security authentication, and charging. The core network includes a plurality of functional units, and can be divided into a control-plane functional entity and a data-plane functional entity. An access and mobility management unit (access and mobility management function, AMF) is responsible for user access management, security authentication, and mobility management. A user plane unit (user plane function, UPF) manages user plane data transmission, traffic statistics collection, and security eavesdropping.

A ground station is responsible for forwarding signaling and service data between a satellite base station and a core network.

A new radio is a radio link between a terminal and base station.

An Xn interface is an interface between base stations, and is mainly for signaling exchange such as handover.

An NG interface: an interface between a base station and a core network, and is mainly for exchange of signaling such as non-access stratum (non-access stratum, NAS) of a core network and service data of a user.

This application is applied to a communication system such as 5G, and relates to radio access network elements such as UE, a base station, and a ground station, to perform uplink and downlink data communication based on a wireless communication protocol.

In the embodiments of this application, the access network device is not limited to a satellite base station, and the access network device may be further deployed on a high-altitude platform, a satellite, the ground, or the like.

The access network device may be an evolved NodeB (evolved NodeB, eNB or eNodeB) in LTE, or a base station in a 5G network or a future evolved public land mobile network (public land mobile network, PLMN), a broadband network service gateway (broadband network gateway, BNG), an aggregation switch, a non-3rd Generation Partnership Project (3rd generation partnership project, 3GPP) access device, or the like. This is not specifically limited in embodiments of this application.

Optionally, the access network device in embodiments of this application may include base stations in various forms, for example, a macro base station, a micro base station (also referred to as a small cell), a relay station, an access point, a next-generation base station (gNodeB, gNB), a baseband unit (Baseband unit, BBU), a transmitting and receiving point (transmitting and receiving point, TRP), a transmission point (transmitting point, TP), a mobile switching center, and the like. This is not specifically limited in embodiments of this application. The satellite mentioned in embodiments of this application may also be a satellite base station, or a network side device carried on a satellite.

The terminal device mentioned in embodiments of this application includes various handheld devices, vehicle-mounted devices, wearable devices, computing devices, or other processing devices that have a wireless communication function, and may be specifically user equipment (user equipment, UE), an access terminal, a subscriber unit, a subscriber station, a mobile station, a mobile console, a remote station, a remote terminal, a mobile device, a user terminal, a terminal, a wireless communication device, a user agent, a user apparatus, or the like. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation security (transportation safety), a wireless terminal in a smart city (smart city), a wireless terminal in a smart home (smart home), a terminal device in a 5G network or a future communication network, or the like.

In addition, FIG. 1 mentions an access network device and a core network device. Unless otherwise specified, a network device mentioned in the following embodiments refers to an access network device (or an access point), for example, a satellite base station.

Embodiments of this application are based on the following assumption: precoding is performed on K terminal devices that simultaneously communicate with each other. In one beam, two terminal devices do not simultaneously appear on a same time-frequency resource. Therefore, the K terminal devices on which precoding is performed are located in different K beams, $K \geq 2$, and K is an integer.

According to the method provided in this application, simple precoding can be implemented.

In some embodiments, this application may support offline storage of a basic channel matrix. In an actual application process, a target channel matrix may be obtained by deleting the basic channel matrix. A matrix (referred to as a precoding matrix below) used for precoding may be obtained through calculation based on the target channel matrix and a precoding algorithm. However, in some other embodiments, in this application, an open-loop communication manner and a closed-loop communication manner may also be combined. The network device corrects the basic channel matrix based on channel information fed back by the terminal device, so that a more accurate precoding matrix can be obtained through calculation.

The following separately describes an open-loop-based precoding method and a closed-loop-based precoding method provided in this application.

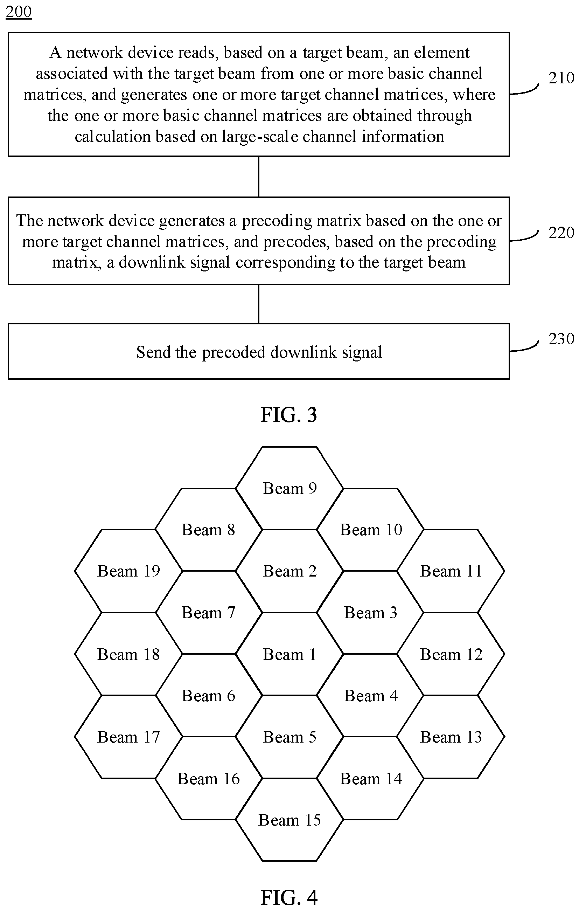

First, an open-loop precoding method is described with reference to FIG. 3.

It may be understood that, in the open-loop precoding method, one or more basic channel matrices are obtained through calculation by using path loss-related information in large-scale channel information. A network device and a terminal device may support offline storage of the one or more basic channel matrices. In a communication process, the terminal device does not need to perform measurement or feed back to a network side, and may obtain a target channel matrix by reading related elements from a stored basic channel matrix, and further obtain a precoding matrix through calculation.

FIG. 3 is a flowchart of an open-loop-based precoding method according to this application.

210: A network device reads, based on a target beam, an element associated with the target beam from one or more basic channel matrices, and generates one or more target channel matrices.

The target beam is a beam that needs to be precoded.

In addition, the one or more basic channel matrices are obtained through calculation based on large-scale channel information. Alternatively, the one or more basic channel matrices are obtained through calculation based on the large-scale channel information and some small-scale channel information (for example, multipath angle information or delay information).

Specifically, information related to a path loss and an antenna gain in the large-scale channel information may be obtained through calculation based on known information of a satellite (for example, a geographical location of the satellite), known information of a beam generated by the satellite (for example, an angle of a beam center, a reference point of the beam, and an angle from a satellite base station to the reference point of the beam), geographical location information of a terminal device, and angle information between the terminal device and the satellite or the reference point of the beam. The one or more basic channel matrices may be obtained through calculation based on information related to a path loss and an antenna gain in the large-scale channel information.

The network device stores the one or more basic channel matrices offline. When precoding a downlink signal, the network device reads the element associated with the target beam from the one or more basic channel matrices, to obtain the target channel matrix.

In the embodiments of this application, there may be one or more basic channel matrices stored offline by the network device and the terminal device. Details are described in the following embodiments.

In addition, the term "association" in the embodiments of this application may also be expressed as "correspondence", or the like. This is not limited.

220: The network device generates a precoding matrix based on the one or more target channel matrices, and precodes, by using the precoding matrix, a downlink signal corresponding to the target beam.

The network device obtains the precoding matrix through calculation based on the target channel matrix with reference to a precoding algorithm. Further, the network device precodes, by using the precoding matrix, the downlink signal corresponding to the target beam.

230: The network device sends the precoded downlink signal.

The open-loop-based precoding method can reduce signaling overheads introduced by a closed loop, and reduce complexity of the terminal device.

As described above, in an implementation, the basic channel matrix obtained through calculation based on the large-scale channel information may be stored in an offline manner.

In an example, the network device stores the basic channel matrix, and the basic channel matrix is shown in the following formula (1):

$$H = \begin{bmatrix} h_{11} & h_{12} & h_{13} & h_{14} & h_{15} & h_{16} & h_{17} & h_{18} & h_{19} & \dots & h_{1K} \\ h_{21} & h_{22} & h_{23} & h_{24} & h_{25} & h_{26} & h_{27} & h_{28} & h_{29} & \dots & h_{2K} \\ h_{31} & h_{32} & h_{33} & h_{34} & h_{35} & h_{36} & h_{37} & h_{38} & h_{39} & \dots & h_{3K} \\ h_{41} & h_{42} & h_{43} & h_{44} & h_{45} & h_{46} & h_{47} & h_{48} & h_{49} & \dots & h_{4K} \\ h_{51} & h_{52} & h_{53} & h_{54} & h_{55} & h_{56} & h_{57} & h_{58} & h_{59} & \dots & h_{5K} \\ h_{61} & h_{62} & h_{63} & h_{64} & h_{65} & h_{66} & h_{67} & h_{68} & h_{69} & \dots & h_{6K} \\ h_{71} & h_{72} & h_{73} & h_{74} & h_{75} & h_{76} & h_{77} & h_{78} & h_{79} & \dots & h_{7K} \\ h_{81} & h_{82} & h_{83} & h_{84} & h_{85} & h_{86} & h_{87} & h_{88} & h_{89} & \dots & h_{8K} \\ h_{91} & h_{92} & h_{93} & h_{94} & h_{95} & h_{96} & h_{97} & h_{98} & h_{99} & \dots & h_{9K} \\ \dots & & & \dots & & & & \dots & & & \\ h_{K1} & h_{K2} & h_{K3} & h_{K4} & h_{K5} & h_{K6} & h_{K7} & h_{K8} & h_{K9} & \dots & h_{KK} \end{bmatrix} \quad (1)$$

Formula (1) represents a basic channel matrix that can be used to precode K beams. It can be learned that the basic channel matrix includes elements of K rows and K columns, and may be used to precode the K beams. The K rows of the basic channel matrix respectively correspond to channels of terminal devices in the K beams. An element $h_{kk}$ ($h \leq K$) on a diagonal represents a fading coefficient of a channel between a $k^{th}$ beam and a user (that is, a terminal device) in the $k^{th}$ beam. An element $h_{ki}$ represents a fading coefficient of a channel between an $i^{th}$ beam and a $k^{th}$ user. $1 \leq i \leq K$, $1 \leq k \leq K$, k and i are integers, and K is a positive integer.

Alternatively, in another meaning, the element $h_{kk}$ in the basic channel matrix represents a channel that a wanted signal that needs to be received by a $k^{th}$ terminal device on the $k^{th}$ beam passes through. $h_{ki}$ represents a channel that an interference signal generated by the $i^{th}$ beam for the terminal device in the $k^{th}$ beam passes through. $1 \leq i \leq K$, $1 \leq k \leq K$, k and i are integers, K is a positive integer, and i is not equal to k.

It should be understood that a basic channel matrix H may be determined by calculating $h_{kk}$ and $h_{ki}$.

A plurality of factors of a large-scale model may be considered for calculation of $h_{kk}$ and $h_{ki}$ in the channel matrix shown in formula (1).

As an example, if only the free path propagation loss is considered, $h_{kk}$ and $h_{ki}$ may be separately calculated according to the following formula:

$$h_{kk} = G_{kk} \cdot PL_k$$

$$h_{ki} = G_{ki} \cdot PL_k \quad (2)$$

$P_{Lk}$ in formula (2) represents a free path propagation loss of a $k^{th}$ channel, and is related to a communication distance and a center frequency. $G_{kk}$ indicates an antenna gain of a $k^{th}$ signal, which is related to an antenna model and an angle ($\theta_{kk}$) between an antenna direction and a UE location. The antenna gain includes an antenna gain of a transmitter and an antenna gain of a receiver.

For example, when the antenna points to a beam center and the UE is located in the beam center, the angle $\theta_{kk}$ is 0. $G_{ki}$ represents a gain of an $i^{th}$ antenna for a $k^{th}$ user, and is related to an angle $\theta_{ik}$ between a direction of the $i^{th}$ antenna and the $k^{th}$ user.

FIG. 4 is a schematic diagram of beams corresponding to elements in a channel matrix.

In the basic channel matrix shown in formula (1), the K columns of the basic channel matrix are arranged in an order of IDs of K beams.

The basic channel matrix provided in this embodiment of this application has a nesting feature, or in other words, including feature.

The nesting feature of the basic channel matrix is a target channel matrix including elements associated with $K_1$ target beams and that is read from the basic channel matrix, and is included in a target channel matrix that includes elements associated with $K_2$ target beams and that is read from the basic channel matrix. The $K_2$ target beams include the $K_1$ target beams. K1 < K2 ≤ K, and K1 and K2 are integers.

In addition, the K columns of the basic channel matrix shown in FIG. 4 are arranged in an order of IDs of the K beams, and are merely used as an example. In another example, the K columns of the basic channel matrix are not arranged in the order of the IDs of the K beams, and the basic channel matrix still has the nesting feature.

For example, if four beams with consecutive IDs are precoded, the first four rows and the first four columns of the basic channel matrix shown in formula (1) are used to obtain the target channel matrix. If seven beams with consecutive IDs are precoded, the target channel matrix may be obtained by using the first seven rows and the first seven columns of the basic channel matrix shown in formula (1). It may be found that a latter target channel matrix completely includes a former target channel matrix. Therefore, in view of the nesting feature of the basic channel matrix, the target channel matrix may be obtained by storing the basic channel matrix and selecting a corresponding element from the basic channel matrix. Basic channel matrices of various scales do not need to be stored, thereby reducing storage complexity of the channel matrix.

More generally, in another possible case, IDs of beams that need to be precoded are discontinuous, and the target channel matrix may be read from the basic channel matrices based on the following rule:

(1) The network device selects one or more basic channel matrices M from prestored channel matrices based on information about the satellite. The one or more prestored basic channel matrices are obtained through calculation based on the large-scale channel information. The following uses selecting one basic channel matrix as an example for description.

It is assumed that there is one basic channel matrix that can be used to precode the K beams, M is a basic channel matrix of $K \cdot K$. M and K are positive integers.

Herein, the information about the satellite may include one or more pieces of information such as a type of a serving satellite, a communication angle, and an orbit height.

In other words, the network device may store different basic channel matrices based on different satellite types, communication elevation angles, and orbit heights. When selecting the basic channel matrix, the network device may obtain a corresponding basic channel matrix according to the type of the serving satellite, the communication elevation angle, and the orbit height.

(2) The network device selects required elements (that is, elements associated with target beam) from the basic channel matrix M based on a plurality of beams (assuming that there are L beams) that need to be precoded, to form the target channel matrix. In this case, a dimension of the target channel matrix is $L \cdot L$, and L is a positive integer.

Herein, the target beam is a beam that needs to be precoded.

In some examples, the target channel matrix may be read from the basic channel matrix M according to one of the following rules.

Rule 1: Rows and columns corresponding to a (K-L) group of non-target beams are deleted from the basic channel matrix M, and remaining elements form a new matrix.

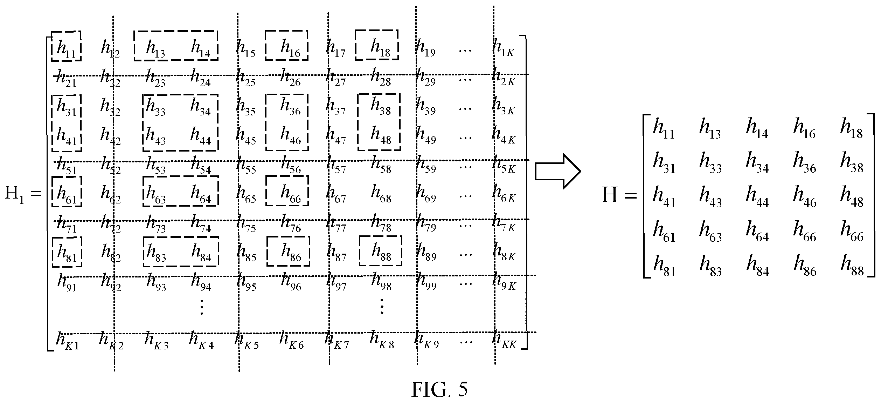

For example, the basic channel matrix shown in formula (1) is used as an example. FIG. 5 is an example of reading the target channel matrix from the basic channel matrix according to this application. It is assumed that the basic channel matrix M shown in formula (1) has 19 beams in total, where IDs of beams that need to be simultaneously precoded are 1, 3, 4, 6, and 8. A large-scale channel (that is, a basic channel matrix) is calculated based on the large-scale channel information, and elements that are not target beams are deleted from the large-scale channel, that is, rows and columns of 2, 5, 7, 9, 10, 11, 12, 13, 14, 15, 16, 17, 18, 19 are deleted (as shown in a part deleted by dashed lines in FIG. 5). Remaining elements form a new channel matrix to generate a precoding matrix, and the new channel matrix is the target channel matrix.

Rule 2: Elements in rows and columns corresponding to the target beams are directly read from the basic channel matrix M, to obtain the target channel matrix used to generate the precoding matrix.

For example, the target beams are 1, 3, 4, 6, and 8. Elements (elements in dashed-line boxes in FIG. 5) corresponding to columns 1, 3, 4, 6, and 8 in rows 1, 3, 4, 6, and 8 are respectively read from the basic channel matrix M. A channel matrix including the read elements is the target channel matrix, and may be used to generate the precoding matrix.

In a specific implementation process, the network device may notify, through broadcast or signaling notification, the terminal device of an ID of a beam on which precoding is currently performed, that is, an ID of the target beam, to ensure correct decoding of the terminal device.

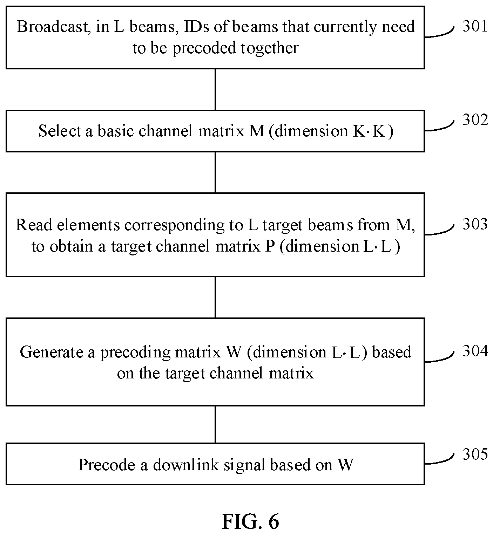

In the foregoing open-loop-based precoding method, a precoding procedure on a network side is shown in FIG. 6. FIG. 6 is an example of an open-loop-based precoding procedure according to this application. In addition, monochromatic multiplexing is used as an example in FIG. 6.

301: A network device broadcasts, in L beams, IDs of beams that currently need to be precoded together, where $L \geq 2$ and is an integer.

In other words, the network device broadcasts an ID of a target beam. The L beams are a quantity of target beams.

302: The network device selects a basic channel matrix M, where it is assumed that a dimension of M is $K \cdot K$.

303: The network device reads elements corresponding to L target beams from the basic channel matrix M, to obtain a target channel matrix P, where a dimension of P is $L \cdot L$.

304: The network device generates a precoding matrix W based on the target channel matrix P, where a dimension of W is L·L.

305: The network device precodes a downlink signal based on the precoding matrix W.

To enable a terminal device to correctly decode the downlink signal, the network device may notify the terminal device of an ID of a target beam on which precoding is currently performed at the same time. For example, the network device may notify the terminal device through broadcast or non-broadcast, or may notify the terminal device by using radio resource control (radio resource control, RRC) signaling, downlink control information (downlink control information, DCI), or the like.

For example, the network device notifies the terminal device of the ID of the target beam through broadcast. For example, the network device may add a new field *BeamIndexforPrecoding* to a field *DownlinkConfigCommonSIB* in a system information block 1 (system information block 1, SIB1). The field indicates IDs of a plurality of target beams on which precoding is simultaneously performed.

For example, the field *BeamIndexforPrecoding* may be shown as follows:
*BeamIndexforPrecoding INTEGER (1,* 2, ... *K)*

For example, the network device notifies the terminal device of the ID of the target beam through non-broadcast. For example, the network device may add a new field *BeamIndexforPrecoding* to a domain *CodebookConfig information element* by using RRC signaling. For example, the field *BeamIndexforPrecoding* may be shown as follows:
*BeamIndexforPrecoding INTEGER (1,* 2, ... *K)*

In the open-loop manner shown in FIG. 6, in this application, a path-related loss in a large-scale model is used to construct a channel matrix used for precoding, so that the terminal device can be prevented from performing unnecessary channel measurement. Signaling overheads introduced by a closed-loop are reduced, and complexity on a terminal device side is reduced.

In addition, in some embodiments, the basic channel matrix provided in this application meets a nesting feature. Therefore, only one basic channel matrix may be stored, and a required target channel matrix is obtained by selecting a corresponding element from the basic channel matrix, thereby reducing storage complexity of the channel matrix.

In the foregoing embodiment, it is assumed that each beam has a same frequency band. In other words, all beams use monochromatic multiplexing. The terminal device calculates or obtains a corresponding channel matrix based on a beam that needs to be precoded.

In the following embodiments, a case of multi-color multiplexing is considered.

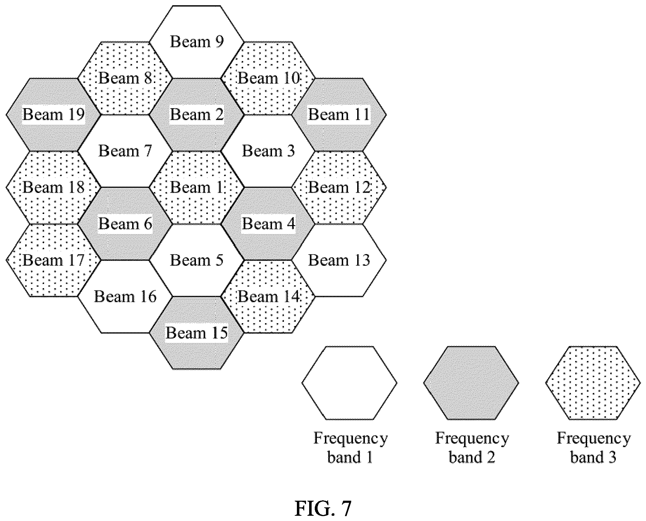

FIG. 7 is an example of cell distribution of multi-color multiplexing. In a case of three-color multiplexing, assumed color distribution of cell beams is shown in FIG. 7. In FIG. 7, beams with a same filling pattern use a same frequency band, and three adjacent beams use different frequency bands.

It has been learned from the foregoing description that inter-beam interference exists in beams of a same frequency band. Therefore, beams of different frequency bands are separately precoded. In the case of multi-color multiplexing, there are a plurality of methods for obtaining a target channel matrix. The following uses three-color multiplexing as an example for description.

Manner 1

It is assumed that there are a maximum of K beams. The K beams use N frequency bands. A network device prestores basic channel matrices respectively corresponding to the N frequency bands. Three-color multiplexing is used as an example. A frequency band 1, a frequency band 2, and a frequency band 3 each correspond to one basic channel matrix. Sizes of basic channel matrices corresponding to different frequency bands are the same, and are all K·K . In other words, the network device stores basic channel matrices of all beams (that is, K beams) in the three frequency bands offline.

When precoding is performed, an element associated with an ID of a target beam of the frequency band is sequentially selected from different basic channel matrices based on a frequency band allocated to each beam, to obtain a target channel matrix corresponding to the frequency band. For a manner of selecting the target channel matrix, refer to the foregoing embodiment of monochromatic multiplexing (for example, the embodiment in FIG. 5). The target channel matrix read from the basic channel matrix corresponding to each frequency band is used to generate a precoding matrix of the frequency band.

In Manner 1, a frequency band corresponding to a beam is not limited. In other words, for a beam, a frequency band to which the beam is allocated is not fixed. Therefore, in this manner, different frequency bands can be flexibly allocated to different beams. When precoding is performed on beams of a same frequency band, a target channel matrix needs to be selected from basic channel matrices of a corresponding frequency band, to generate a precoding matrix.

Manner 2

Frequency band allocation of a cell is fixed, or an ID of a beam is one-to-one allocated to a frequency band. Using three-color multiplexing as an example, three different frequency bands are allocated in total, and which beams being allocated to which frequency band is fixed. Satellites of a same type have three corresponding basic channel matrices within a specific elevation range. Different from Manner 1, sizes of the three basic channel matrices are not all K·K , but are related to a quantity of beams in the frequency band. Specifically, for a frequency band, a size of a basic channel matrix corresponding to the frequency band is equal to a quantity of beams corresponding to the frequency band.

FIG. 7 is used as an example. Beams corresponding to the frequency band 1 are 2, 4, 6, 11, 15, and 19. There are six beams in total. In this case, a size of a basic channel matrix corresponding to the frequency band 1 is $6\times6$. Beams corresponding to the frequency band 2 are 3, 5, 9, 7, 13, and 17. There are six beams in total. In this case, a size of a basic channel matrix corresponding to the frequency band 2 is $6\times6$. Beams corresponding to the frequency band 3 are 1, 8, 10, 12, 14, 16, and 18. There are seven beams in total. In this case, a size of a basic channel matrix corresponding to the frequency band 3 is $7\times7$.

Beams in different colors cannot be precoded together. A size of the basic channel matrix corresponds to a total quantity of beams corresponding to each frequency band.

It can be learned that in Manner 2, the network device pre-stores one basic channel matrix for each frequency band. Therefore, in this manner, there are a plurality of basic channel matrices stored by the network device, depending on a case of multi-color multiplexing. A quantity of basic channel matrices may be the same as a quantity of colors of beams.

When a satellite operates in one frequency band, the satellite may use Manner 2 to store only one basic channel matrix corresponding to the frequency band, thereby reducing storage overheads.

Manner 3

Frequency band allocation of a cell is fixed. It is assumed that there are three different frequency bands in total. Satellites of a same type pre-store a basic channel matrix whose size is K·K within a specific elevation range. Elements in a matrix are calculated based on a color corresponding to a current beam, and inter-beam interference comes only from beams of a same color. In this case, when a channel matrix is calculated, an angle $\theta_{ik}$ is not an adjacent beam, but an angle between a target beam and an interference beam of the same color.

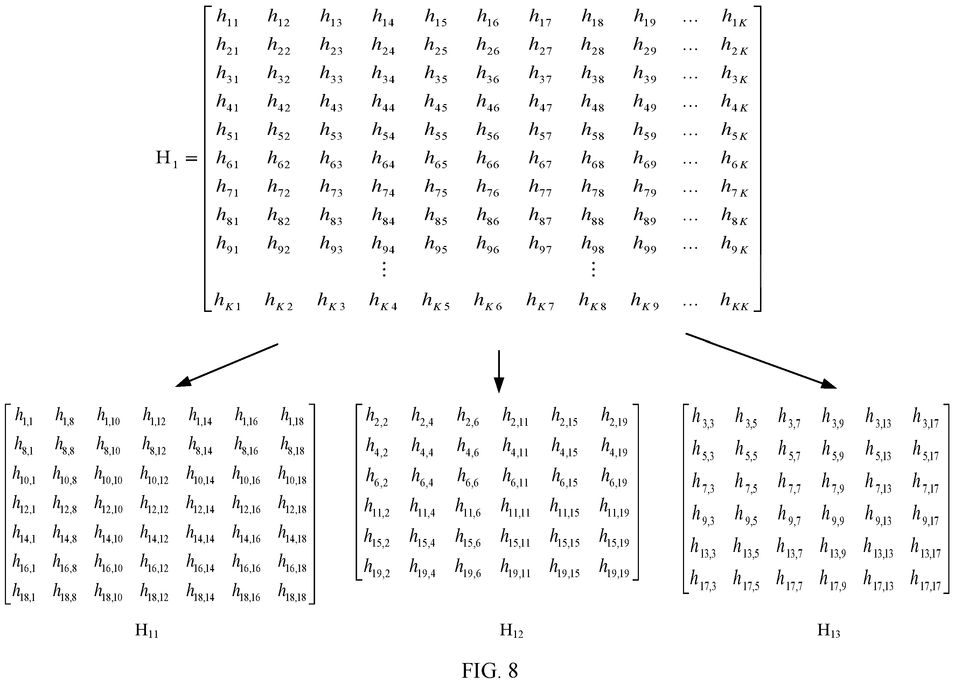

The target channel matrix may be obtained by reading from a basic channel matrix. A specific reading process is shown in FIG. 8.

FIG. 8 is a schematic diagram of reading a target channel matrix from a basic channel matrix in a multi-color multiplexing scenario. As shown in FIG. 8, it is assumed that there are a total of 19 beams in three colors, and the 19 beams use three frequency bands: a frequency band 1, a frequency band 2, and a frequency band 3. Frequency band 1 corresponds to seven beams whose IDs are 1, 8, 10, 12, 14, 16, and 18. Frequency band 2 corresponds to six beams whose IDs are 2, 4, 6, 11, 15, and 19. Frequency band 3 corresponds to six beams whose IDs are 3, 5, 7, 9, 13, and 17. A network device prestores a basic channel matrix. The network device reads a target channel matrix of each frequency band from the basic channel matrix based on a color, to separately obtain target channel matrices corresponding to different frequency bands, for example, $H_{11}$, $H_{12}$, and $H_{13}$ shown in FIG. 8.

It should be understood that, in this embodiment of this application, if it is assumed that there are L target beams, reading, from the basic channel matrix, an element associated with an ID of a target beam means reading, from the basic channel matrix, elements in L columns corresponding to IDs of L target beams and in L rows corresponding to the IDs of the L target beams. $L \geq 2$, and L is an integer.

When the satellite operates on a plurality of frequency bands, compared with the manner 1, in the manner 3, because each beam is allocated to a fixed frequency band, the satellite may store only one basic channel matrix whose size is K·K . When precoding is performed, the satellite reads a related element of each frequency band from the basic channel matrix based on a color, to obtain a target channel matrix of each color. Only a large matrix is used for storage. In a scenario in which a size of a reserved storage resource is fixed, storage complexity can be reduced. For example, a size of each storage resource block is K·K , and only one resource storage block is required. However, for a manner of storing a plurality of basic matrices, three resource storage blocks are required.

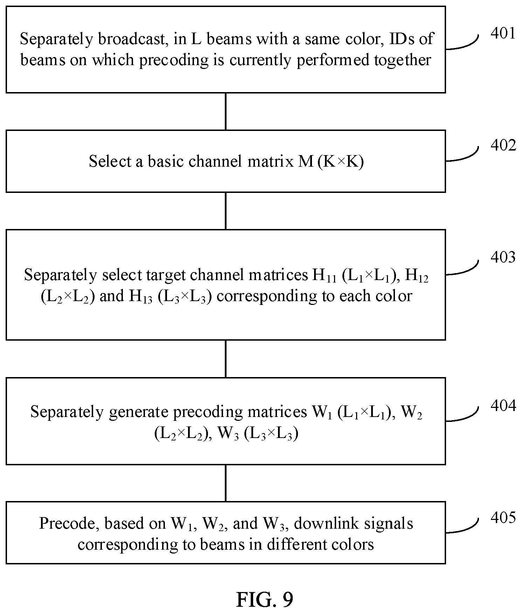

With reference to FIG. 9, the following describes a precoding procedure of a multi-color multiplexed beam by using an example. FIG. 9 is an example of a precoding procedure on a network side in a multi-color multiplexing scenario according to this application. In addition, FIG. 9 uses multi-color multiplexing (3-color multiplexing) as an example.

401: A network device separately broadcasts, in L beams with a same color, IDs of beams that currently need to be encoded together.

It should be understood that L herein refers to a quantity of target beams belonging to a same color. FIG. 8 is used as an example. A frequency band 1 corresponds to seven beams with a same color, and beam IDs are respectively 1, 8, 10, 12, 14, 16, and 18. In this case, Lis 7. A frequency band 2 corresponds to six beams with a same color. Beam IDs are respectively 2, 4, 6, 11, 15, and 19. In this case, L is 6. A frequency band 3 corresponds to six beams with a same color. Beam IDs are respectively 3, 5, 7, 9, 13, and 17. In this case, L is 6.

402: The network device selects the basic channel matrix M.

403: The network device separately selects, from the basic channel matrix M, target channel matrices $H_{11}$, $H_{12}$, and $H_{13}$ corresponding to beams in each color.

A size of each target channel matrix is related to a total quantity of beams of a frequency band corresponding to the target channel matrix. For example, if $H_{11}$ corresponds to the frequency band 1 and there are seven beams in the frequency band 1, a size of $H_{11}$ is $7 \times 7$. If $H_{12}$ corresponds to the frequency band 2 and there are six beams in the frequency band 2, a size of $H_{12}$ is $6 \times 6$. If $H_{13}$ corresponds to the frequency band 3 and there are six beams in the frequency band 3, a size of $H_{13}$ is $6 \times 6$.

404: The network device separately generates precoding matrices $W_1$, $W_2$, and $W_3$ based on the selected target channel matrices.

It can be learned from step 403 and step 404 that, in this embodiment, the network device stores one basic channel matrix, and the network device selects a target channel matrix corresponding to each color, to obtain three target channel matrices. Then, the network device may generate, based on each target channel matrix, a precoding matrix corresponding to each color. It can be learned that in this embodiment, a plurality of target channel matrices are obtained based on one basic channel matrix, and a plurality of precoding matrices are generated.

405: The network device separately precodes, based on the precoding matrices $W_1$, $W_2$, and $W_3$, downlink signals corresponding to beams in different colors.

In the foregoing embodiment, with reference to a multi-color multiplexing scenario, a target channel matrix including beams of a same color is obtained from the basic channel matrix. On the basis of multi-color multiplexing, precoding is further performed, so that interference between beams of a same color can be reduced, and system throughput can be improved.

Similar to the monochromatic multiplexing scenario, in the multi-color multiplexing scenario, the basic channel matrix still has a nesting feature. When precoding is performed on the beams of the same color, a corresponding element may be read from a corresponding base matrix, to obtain the target channel matrix. Th target channel matrix is used to calculate the precoding matrix. This can reduce storage complexity on a network device side and a terminal device side.

The foregoing embodiment describes an open-loop-based precoding manner. An element in the basic channel matrix is usually obtained through evaluation based on a distance from a satellite to a reference point (for example, a beam center) of a corresponding beam. However, in an actual communication process, the terminal device may be far away from the reference point of the beam. A distance error is introduced, causing inaccuracy of the channel matrix. Therefore, precoding in the foregoing open-loop manner may reduce precoding performance.

In view of this case, this application further provides a closed-loop based precoding manner, to correct some elements in a basic channel matrix based on a location of the terminal device, to improve accuracy of the basic channel matrix, and further obtain a more accurate precoding matrix, to improve the precoding performance.

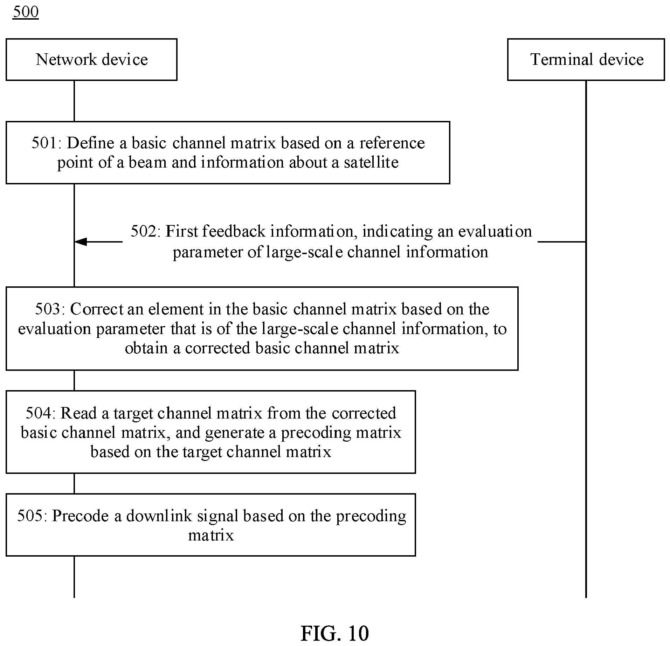

Specifically, for a correction process, refer to a procedure shown in FIG. 10.

FIG. 10 is a schematic diagram in which a network device corrects a basic channel matrix based on a closed-loop mechanism.

501: A network device defines a basic channel matrix based on a reference point of a beam and information about a satellite.

The reference point of the beam may be a beam center or another location of the beam. This is not limited.

In addition, the information about the satellite may include one or more pieces of information such as a type of the satellite, a communication elevation angle, and an orbit height.

Specifically, the network device may separately define basic channel matrices of serving satellites of different types, communication elevation angles, and orbit heights.

502: The network device receives feedback information from a terminal device, where the feedback information indicates an evaluation parameter of large-scale channel information.

Optionally, the evaluation parameter of the large-scale channel information may include one or more of an angle parameter, a location parameter, a channel information parameter, and the like. Alternatively, the evaluation parameter may be another evaluation parameter that can be used for the large-scale channel information.

In step 502, the feedback information received by the network device may come from different beams. In this application, a beam corresponding to a terminal device that receives the feedback information is referred to as a first beam. Therefore, the network device may receive an evaluation parameter of large-scale channel information reported by terminal devices in one or more (assumed to be M) first beams. $M \geq 1$, and M is an integer.

503: The network device corrects an element in the basic channel matrix based on the evaluation parameter that is of the large-scale channel information and that is indicated by the feedback information, to obtain a corrected basic channel matrix.

Specifically, the network device corrects, based on the evaluation parameter of the large-scale channel information, an element associated with the M first beams in the basic channel matrix. The element associated with the M first beams in the basic channel matrix includes an element whose row index is an ID of any first beam in the M first beams and/or whose column index is an ID of any first beam in the M first beams in the basic channel matrix.

In FIG. 10, the network device corrects related elements of one or more basic channel matrices based on the evaluation parameter that is of the large-scale channel information and that is fed back by the terminal device. It may be understood that, in this implementation, an element in the one or more basic channel matrices before correction is obtained through calculation based on a reference point of a beam. The evaluation parameter of the large-scale channel information fed back by the terminal device includes at least an actual geographical location of the terminal device during communication. Therefore, the basic channel matrix is corrected by using the evaluation parameter that is of the large-scale channel information and that is fed back by the terminal device, so that a corrected element can be more accurate, thereby improving precoding performance.

For example, in another implementation of the closed-loop precoding method, the terminal device located in the first beam sends the feedback information to the network device. The feedback information indicates the evaluation parameter of the large-scale channel information. The network device may directly calculate, based on the large-scale channel information, the element associated with the first beam in the basic channel matrix.

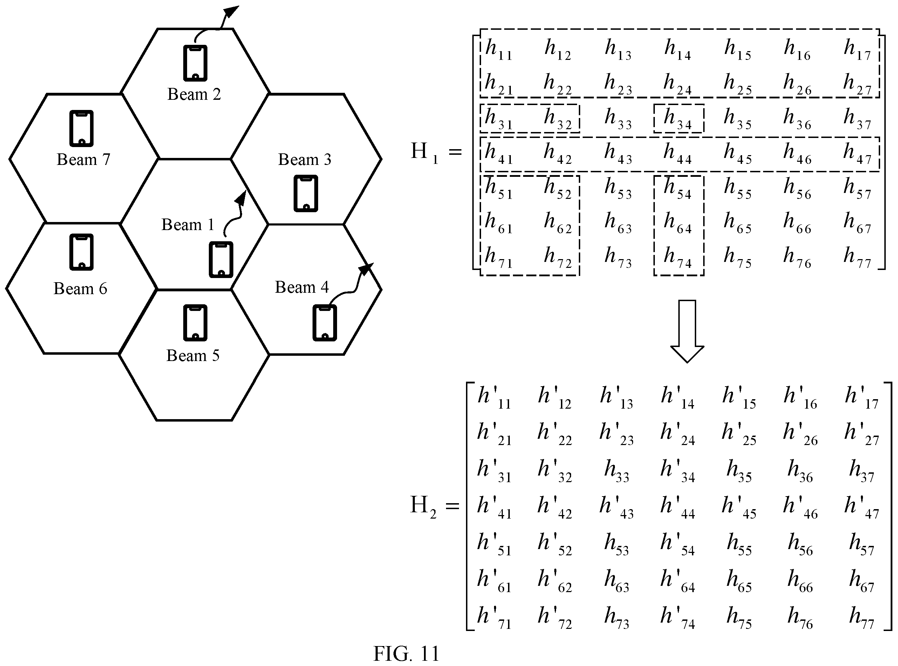

The following describes a process of correcting the basic channel matrix by using an example with reference to FIG. 11.

FIG. 11 is an example of correcting a basic channel matrix based on a closed-loop manner. It is assumed that the terminal device whose basic channel matrix defined by the network device is $H_1$ and whose beam IDs are 1, 2, and 4 reports first feedback information. The network device corrects, based on the first feedback information reported by the terminal device in the beams 1, 2, and 4, an element associated with beams whose beam IDs are 1, 2, and 4 in the basic channel matrix $H_1$. The corrected basic channel matrix is shown as $H_2$, where $h'_{i,j}$ is a corrected element. Specifically, the network device corrects an element whose row index includes the beam IDs 1, 2, and 4 and/or an element whose column index includes the beam IDs 1, 2, and 4, for example, an element in a dashed box in FIG. 11.

504: The network device reads a target channel matrix from the corrected basic channel matrix, and generates a precoding matrix based on the target channel matrix.

505: The network device precodes a downlink signal based on the precoding matrix.

In the precoding procedure on the network side shown in FIG. 10, a closed-loop mechanism is introduced for precoding. Specifically, the network device stores the basic channel matrix offline in the foregoing open-loop manner. Subsequently, the network device receives the evaluation parameter of the large-scale channel information from the terminal device, corrects the element of the stored basic channel matrix based on the evaluation parameter of the large-scale channel information, obtains the target channel matrix based on the corrected basic channel matrix, and calculates the precoding matrix. This improves accuracy of channel estimation on the network side.

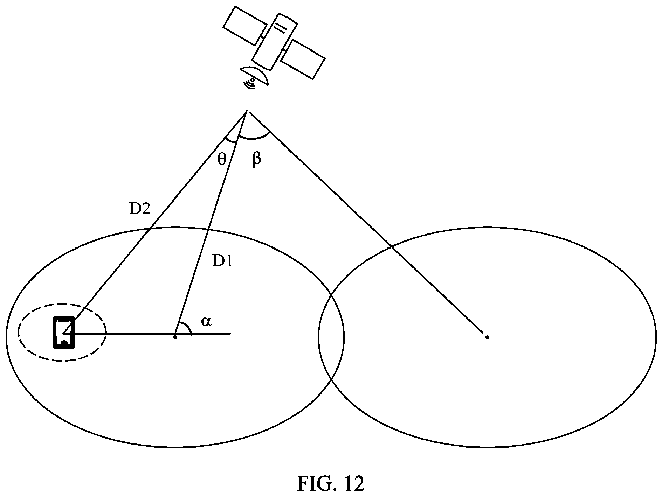

Optionally, the evaluation parameter of the large-scale channel information may include the location parameter, the angle parameter, the channel information parameter, and the like of the terminal device. In the following FIG. 12, an example in which the terminal device feeds back an angle parameter is used for description.

FIG. 12 is a schematic diagram of a change between a location of a terminal device and an angle of a reference point of a beam relative to a serving satellite. For example, an evaluation parameter of large-scale channel information fed back by the terminal device is an angle parameter, and it is assumed that the reference point of the beam is a beam center. If the terminal device feeds back a location of the terminal device, and the satellite obtains, based on the location of the terminal and the beam center, that an angle between the two locations relative to the serving satellite is $\theta$, then:

$$h_{kk} = G_{kk}(\theta) \cdot Gr_{kk} \cdot PL_k(\theta)$$

$$h_{ki} = G_{ki}(\theta) \cdot Gr_{ki} \cdot PL_k(\theta) \tag{3}$$

Take a reflective antenna model as an example. A normalized power gain and angle $\theta$ of an antenna meet the following formula:

$$G_{kk}(\theta) = \begin{cases} 1, & \theta = 0 \\ 4\left|\dfrac{J_1(k\alpha\sin\theta)}{k\alpha\sin\theta}\right|^2, & 0 < |\theta| \leq 90° \end{cases}$$

$$G_{ki}(\theta) = \begin{cases} 1, & \theta = 0 \\ 4\left|\dfrac{J_1(k\alpha\sin\theta+\beta)}{k\alpha\sin(\theta+\beta)}\right|^2, & 0 < |\theta+\beta| \leq 90° \end{cases}$$

$$k = 2\pi f_c / c \qquad\qquad\qquad (4)$$

$\alpha$ is a communication elevation angle in FIG. 11, $f_c$ is the center frequency, c is the speed of light, $\beta$ indicates an angle between an interfering antenna and a target antenna, Gr is a gain of a receiver, $Gr_{kk}$ is a gain of a wanted signal received by the receiver, and $Gr_{ki}$ is a gain of an interference signal received by the receiver.

When a path loss is calculated, a path changes as follows:

$$\frac{D_2}{D_1} = \sin(\alpha - \beta)/\sin\alpha \qquad\qquad\qquad (5)$$

$D_1$ represents a distance between the serving satellite and the beam center of the target beam, and is known. $D_2$ represents a distance between the serving satellite and a user.

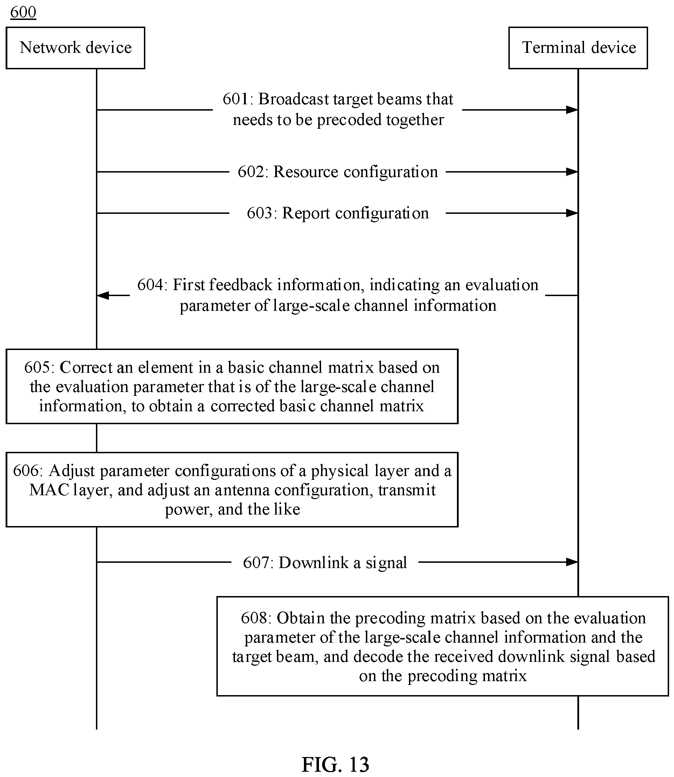

With reference to FIG. 13, the following describes the foregoing precoding procedure based on a closed-loop mechanism by using an example.

FIG. 13 is an example of a closed-loop-based precoding procedure according to this application.

601: A network device broadcasts, to a terminal device, target beams that needs to be precoded together.

602: The network device sends a resource configuration to the terminal device.

For example, the resource configuration may include a resource used by the terminal device to send feedback information, for example, a time domain resource or a frequency domain resource, a period for sending the feedback information, content of the feedback information, and the like.

603: The network device sends a report configuration to the terminal device.

For example, the report configuration may include content of a report, a trigger condition for sending the report, and the like.

604: The network device receives first feedback information from the terminal device, where the first feedback information indicates an evaluation parameter of large-scale channel information.

Herein, the first feedback information is used as an example of feedback information that is sent by the terminal device to the network device and that indicates the evaluation parameter of the large-scale channel information.

605: The network device corrects an element of a basic channel matrix based on the evaluation parameter of the large-scale channel information, to obtain a corrected basic channel matrix, and obtains a precoding matrix by calculation based on the corrected basic channel matrix.

606: The network device adjusts parameter configurations of a physical layer and a MAC layer, and adjusts an antenna configuration, transmit power, and the like.

607: The network device precodes a downlink signal by using the precoding matrix.

608: The network device sends the precoded downlink signal to the terminal device.

609: The terminal device obtains the precoding matrix based on the evaluation parameter of the large-scale channel information and the target beam, and decodes the received downlink signal based on the precoding matrix.

In this embodiment, a closed-loop mechanism is introduced. The terminal device reports the evaluation parameter of the large-scale channel information to the network device, to assist the network device in correcting the basic channel matrix, thereby improving channel estimation accuracy and precoding performance.

In addition, it should be noted that although the closed-loop mechanism is introduced, the terminal device only needs to report a simple evaluation parameter of the large-scale channel information, for example, a location and an angle of the terminal device, and does not need to accurately measure a channel. Compared with a normal channel measurement and channel information reporting procedure, complexity and resource overheads can still be effectively reduced.

In the foregoing embodiment, the network device stores one or more basic channel matrices offline, reads a corresponding element from the one or more basic channel matrices based on a target beam ID to obtain one or more target channel matrices, and further calculates the precoding matrix based on the one or more target channel matrices.

In addition, in this embodiment of this application, the network device may further determine the target channel matrix through online calculation or table lookup, and then calculate the precoding matrix. The following provides detailed descriptions.

In an implementation, the network device may calculate the precoding matrix online.

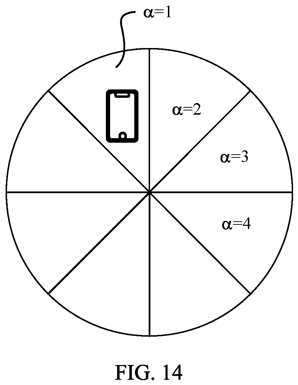

FIG. 14 is a schematic diagram of calculating a target channel matrix online according to this application. As shown in FIG. 14, a coverage area of a beam of a serving satellite is divided into different areas, where the different areas are respectively corresponding to one number. A terminal device reports a location area parameter or a distance parameter of the terminal device in a cell based on a geographical location of the terminal device. The distance parameter is a distance from the terminal device to a reference point of a beam or a serving satellite. A network device may evaluate, based on the location area parameter or the distance parameter reported by the terminal device, a distance from the reference point (for example, may be generally an area center) of these areas to the serving satellite, a relative angle between different location areas, and an angle between the terminal device and the reference point of the beam (for example, may be a beam center).

In a satellite communication system, because a satellite is far away from the terminal device, it may be approximately considered that distances and angles from different locations of the terminal device in an area to the satellite are the same. According to the foregoing formula (1), a channel matrix (that is, a target channel matrix) used to generate a precoding matrix may be obtained through calculation, and the precoding matrix is further generated.

Optionally, in another implementation, the network device may calculate the precoding matrix through table lookup.

In this implementation, there is a correspondence between an evaluation parameter of large-scale channel information reported by the terminal device and channel information (for example, a path loss). It is assumed that the correspondence is stored in a table manner. The network device may obtain a free path transmission loss of the terminal device by looking up the table based on the evaluation parameter that is of the large-scale channel information and that is reported by the terminal device. There is a one-to-one correspondence between different path losses and path distances. Therefore, a location of each terminal device in a serving beam may be obtained by using the path loss, and finally a channel matrix may be obtained.

For example, it is assumed that there is a correspondence between a path loss indication parameter $\alpha$ reported by the terminal device and the path loss, as shown in Table 1.

**Table 1**

| Path loss indication parameter $\alpha$ | Path loss |
| --- | --- |
| 1 | 180 dB |
| 2 | 185 dB |
| 3 | 190 dB |
| 4 | 195 dB |
| ... | ... |

It can be learned from the foregoing description of the large-scale model that a free path loss is further related to a center frequency. When there are many types of satellites and different frequency bands are involved, a possible free path loss range is large. Therefore, Table 1 becomes very large.

In addition, to improve precision, Table 1 may further need to be divided based on higher precision, and indication overheads also become large. For example, "1" indicates 100 dB, and increases based on precision of 1 dB. When 200 dB is indicated, "200" needs to be used for representation. It may be found that in this case, indication overheads are high, and eight bits ($ceil(\log_2 200)$) are required for indication, where ceil represents rounding up.

Therefore, in this embodiment of this application, Table 1 may be classified based on different types and different frequency bands of satellites, to reduce indication overheads, as shown in Table 2 to Table 6 below. During use, the network device may select a proper table for table lookup based on a type of the serving satellite and different frequency bands.

**Table 2**

| GEO S band (a) | |
| --- | --- |
| Path loss indication parameter $\alpha$ | Path loss |
| 1 | 180 dB |
| 2 | 182 dB |
| 3 | 184 dB |
| 4 | 186 dB |
| ... | ... |

**Table 3**

| GEO Ka band (b) | |
| --- | --- |
| Path loss indication parameter $\alpha$ | Path loss |
| 1 | 190 dB |
| 2 | 192 dB |
| 3 | 194 dB |
| 4 | 196 dB |
| ... | ... |

**Table 4**

| LEO600 S band (c) | |
| --- | --- |
| Path loss indication parameter $\alpha$ | Path loss |
| 1 | 180 dB |
| 2 | 182 dB |
| 3 | 184 dB |
| 4 | 186 dB |
| ... | ... |

**Table 5**

| LEO600 S band (c) | |
| --- | --- |
| Path loss indication parameter $\alpha$ | Path loss |
| 1 | 190 dB |
| 2 | 192 dB |
| 3 | 194 dB |
| 4 | 196 dB |
| ... | ... |

In Table 2 to Table 5, GEO represents a geostationary earth orbit (geostationary earth orbit, GEO), and LEO represents a low earth orbit (low earth orbit, LEO).

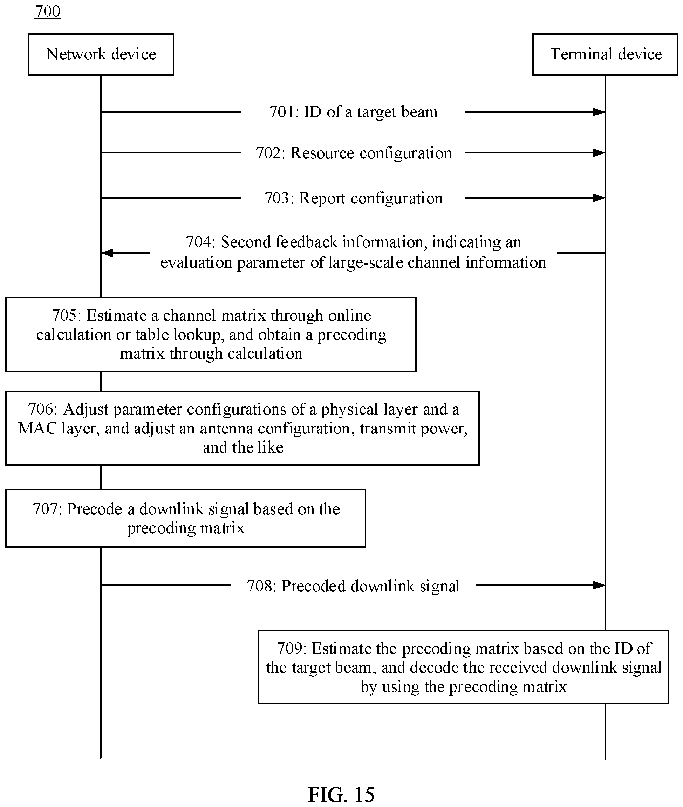

FIG. 15 is an example of a precoding procedure based on table lookup or online calculation on a network side.

701: A network device notifies a terminal device of an ID of a target beam.

702: The network device sends a resource configuration to the terminal device.

703: The network device sends a report configuration to the terminal device.

704: The network device receives second feedback information from the terminal device, where the second feedback information indicates an evaluation parameter of large-scale channel information.

First feedback information is another example of feedback information that is sent by the terminal device to the network device and that indicates the evaluation parameter of the large-scale channel information.

Optionally, the second feedback information in this embodiment may be the same as or different from the foregoing first feedback information. This is not limited.

705: The network device estimates a channel matrix through online calculation or table lookup, and obtains a precoding matrix through calculation based on the channel matrix.

706: The network device adjusts parameter configurations of a physical layer and a MAC layer, and adjusts an antenna configuration, transmit power, and the like.

707: The network device precodes a downlink signal by using the precoding matrix.

708: The network device sends the precoded downlink signal to the terminal device.

709: The terminal device estimates the precoding matrix based on the ID of the target beam, and decodes the received downlink signal based on the precoding matrix.

Compared with an implementation in which the network device or the terminal device stores the basic channel matrix offline, offline storage is not performed in this embodiment, but some calculation overheads are introduced. Due to different types of satellites, communication elevation angles, and the like, if corresponding basic channel matrices are separately stored, storage overheads are also large. In this embodiment, the terminal device simply feeds back the evaluation parameter of the large-scale channel information, to assist the network device in calculating the channel matrix. This closed-loop mechanism can improve channel estimation precision, and can also avoid a large quantity of storage overheads.

In addition, by using simple table storage, some calculation overheads can be reduced. Therefore, in this embodiment, a compromise between calculation complexity and the storage overheads can be obtained.

Further, in this application, it is considered that if a moving speed of the terminal device is high, because a communication distance between the terminal device and a satellite is long, when the satellite receives the evaluation parameter of the large-scale channel information reported by the terminal device, performs channel estimation based on the evaluation parameter, and transmits the downlink signal, the terminal device is far away from an original location. Therefore, in this case, the evaluation parameter of the large-scale channel information reported by the terminal device has expired, and the channel matrix obtained by the network device through online calculation or table lookup calculation based on the evaluation parameter has also expired.

Therefore, for a case in which channel information expires because the terminal device moves at a high speed, this application provides that in addition to reporting the evaluation parameter (for example, a parameter such as a location or an angle of the terminal device or a path loss indication parameter ex) of the large-scale channel information, the terminal device adds a correction coefficient to reported content. The correction coefficient is related to the moving speed of the terminal device, to assist the network device in considering a moving speed of the terminal device when estimating the channel matrix based on the evaluation parameter of the large-scale channel information reported by the terminal device.

For example, in the table lookup manner, the network device obtains an angle $\theta$ of the terminal device relative to a beam center based on a path loss indication parameter $\alpha$. When the network device evaluates the channel matrix, an actually used angle should be:

$$\theta' = \theta + \eta \cdot \Delta t \tag{6}$$

$\eta$ is a correction coefficient, and is related to a round trip delay difference between the terminal device and the serving satellite. $\Delta t$ is specifically used to indicate an interval between a time at which the terminal device sends an uplink signal and a time at which the network device sends the downlink signal.

For example, a base station side determines the correction coefficient through table lookup based on an indication parameter that is of the correction coefficient and that is reported by the terminal device, for example, Table 6.

**Table 6**

| Indication parameter | $\eta$ |
|---|---|
| 0 | 0.05 rad/s |
| 1 | 0.1 rad/s |

(continued)

| Indication parameter | $\eta$ |
|---|---|
| 2 | 0.15 rad/s |
| 3 | 0.2 rad/s |
| 4 | 0.25 rad/s |

It should be understood that values and units in Table 6 are merely examples, and are not limited to Table 6.

In addition, the correction coefficient reported by the terminal device is not limited to correction of an angle. Because the angle is obtained through calculation based on a geographical location, and feedback of the user may be correction of a geographical location, correction of a communication distance, correction of a relative location from a geographical location to a reference point, correction of a distance from a geographical location of the terminal device to a satellite location, correction of a free propagation path loss, or the like.

For example, the base station side calculates the correction coefficient in an agreed manner based on one or more indication parameters reported by the terminal device, as shown in Table 7.

For example, a terminal side indicates one or more indication parameters, for example, ii, $i_2$, $i_3$, and $i_4$ in Table 7.

**Table 7**

| Indication parameter | | | |
|---|---|---|---|
| $i_1$, $i_2$, $i_3$, ... | $i_4$ | | |
| 0,1,2,3,... | 0 | 1 | 2 | 3 |
| | $a_{1,1} \cdot i_1 + a_{1,2} \cdot i_2 + a_{1,3} \cdot i_3$ | $a_{2,1} \cdot i_1 + a_{2,2} \cdot i_2 + a_{2,3} \cdot i_3$ | $a_{2,1} \cdot i_1 + a_{2,2} \cdot i_2 + a_{2,3} \cdot i_3$ | $a_{3,1} \cdot i_1 + a_{3,2} \cdot i_2 + a_{3,3} \cdot i_3$ |

Parameters $a_{x,y}$ are agreed parameters.

In addition, the foregoing Table 7 may also be used by the base station side to directly calculate a free propagation path loss, a distance, a location, and the like. The data may also be obtained through calculation based on a fixed parameter (for example, a geographical location or a frequency). To be specific, the base station side directly obtains based on the indication parameter reported by the terminal device and the calculation formula in Table 7.

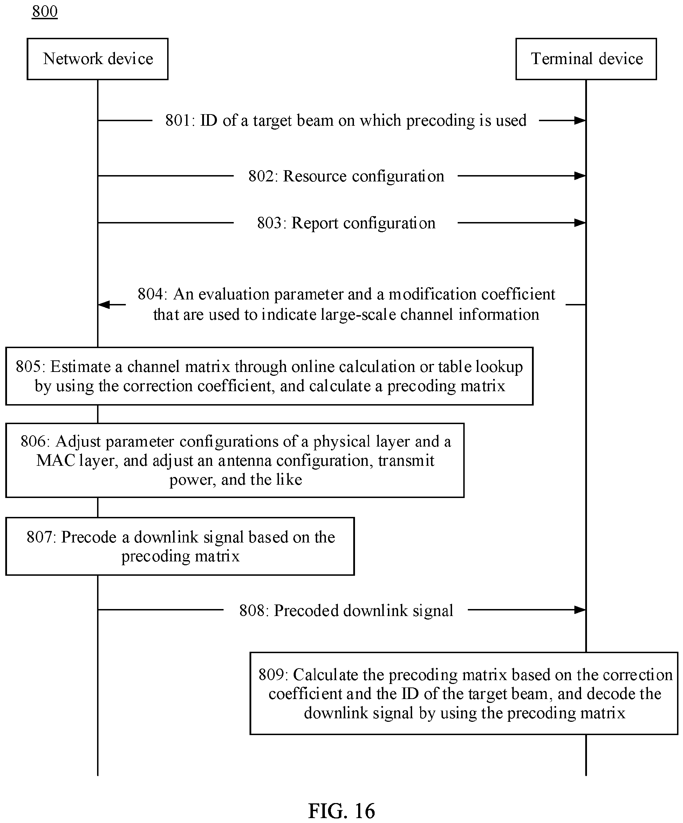

FIG. 16 is a schematic diagram of a procedure of applying a correction coefficient to precoding according to this application.

801: A network device notifies a terminal device of an ID of a target beam on which precoding is used.

802: The network device sends a resource configuration to the terminal device.

803: The network device sends a report configuration to the terminal device.

804: The terminal device reports an evaluation parameter and a correction coefficient of large-scale channel information to the network device.

In some examples, the evaluation parameter of the large-scale channel information may include a location parameter, an angle parameter, a distance parameter, and the like of the terminal device.

805: The network device estimates a channel matrix through online calculation or table lookup by using the correction coefficient, and obtains a precoding matrix through calculation based on the channel matrix.

806: The network device adjusts parameter configurations of a physical layer and a MAC layer, and adjusts an antenna configuration, transmit power, and the like.

807: The network device precodes a downlink signal based on the precoding matrix, and sends the precoded downlink signal.

808: The terminal device estimates the precoding matrix based on the correction coefficient and the ID of the target beam, and decodes the received downlink signal based on the precoding matrix.

In this embodiment, the terminal device reports the correction coefficient based on a moving speed of the terminal device, to avoid the foregoing problem that the evaluation parameter of the large-scale related channel information reported by the terminal device expires. The network device can obtain, based on the evaluation parameter and the correction coefficient that are fed back by a user, channel information when a satellite sends the downlink signal, and can obtain higher precision and better performance.

In this application, for a problem that a round-trip delay of a signal is long and fed-back channel information is long expired in a satellite communication system, an open-loop manner or a simple closed-loop manner is designed, and precoding is performed only based on the large-scale channel information. Because the large-scale channel information is related only to a location and an antenna model, the terminal device does not need to frequently measure information and feed back a large amount of channel information. Therefore, complexity of the terminal can be reduced, and signaling overheads can be reduced.

In addition, because the large-scale channel information occupies a main channel, precoding is performed only based on the large-scale channel information, and a large performance loss is not introduced. Compared with directly using expired channel information that is fed back (it is assumed herein that a large-scale change may be ignored, and expiration of a channel is mainly caused by fast-changing small-scale channel information), this method has better performance.

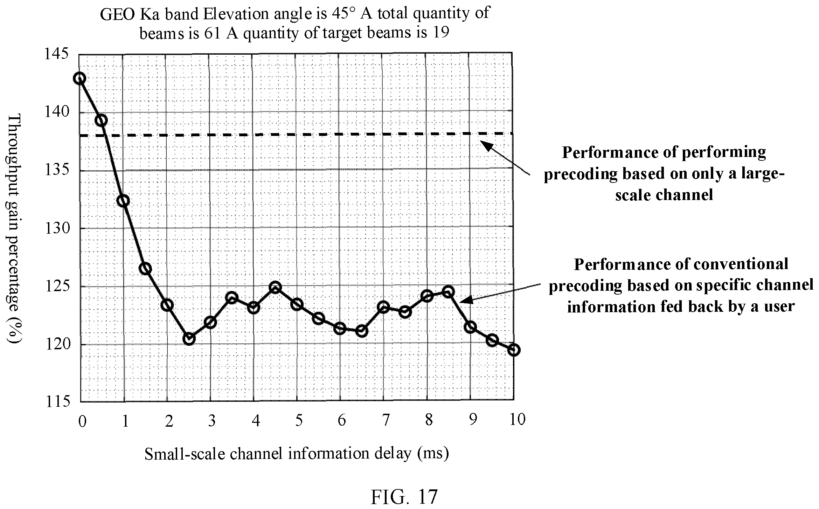

FIG. 17 shows performance comparison between precoding performed by using small-scale channel information and precoding performed by using large-scale channel information in this application. A scenario in FIG. 17 is a geostationary earth orbit (geostationary earth orbit, GEO), a communication elevation angle is 45 degrees, a center frequency is 20 GHz, a total quantity of beams is 61, and a quantity of target beams is 19. A line with an o symbol is performance of directly performing precoding by using expired channel information. It can be seen that the system performance (for example, throughput gain) deteriorates as expiration time increases and finally becomes stable. This phenomenon is mainly due to a fact that a small-scale channel with expiration delay is similar to noise superimposed on a large-scale channel. A dashed line represents precoding performance performed based on the large-scale channel, and the line is precoded only based on the large-scale channel, and is not affected by an expired small-scale channel.

The foregoing describes in detail the precoding method in the satellite communication system provided in this application. The following describes a communication apparatus provided in this application.

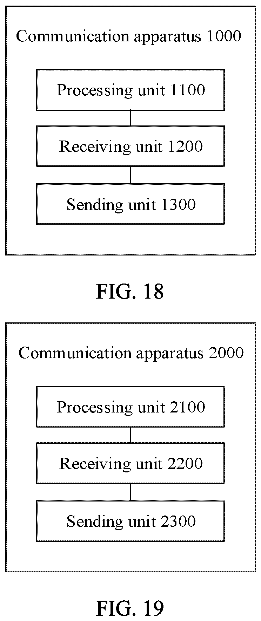

FIG. 18 is a schematic block diagram of a communication apparatus according to this application. As shown in FIG. 18, a communication apparatus 1000 includes a processing unit 1100, a receiving unit 1200, and a sending unit 1300.

The processing unit 1100 is configured to: read, based on a target beam, an element associated with the target beam from one or more basic channel matrices, and generate one or more target channel matrices, where the target beam is a beam that needs to be precoded, and the one or more basic channel matrices are obtained through calculation based on large-scale channel information; and

generate a precoding matrix based on the one or more target channel matrices, and precodes, by using the precoding matrix, a downlink signal corresponding to the target beam.

The sending unit 1300 is configured to send the precoded downlink signal.

Optionally, in an embodiment, there is one basic channel matrix. The basic channel matrix includes elements in K rows and K columns. The basic channel matrix may be used for precoding of K beams. The K rows of the basic channel matrix respectively correspond to channels of a terminal device in the K beams. An element $h_{kk}$ in the basic channel matrix represents a channel through which a wanted signal that needs to be received by a $k^{th}$ terminal device on a $k^{th}$ beam passes. $h_{ki}$ represents a channel that an interference signal generated by an $i^{th}$ beam for a terminal device in the $k^{th}$ beam passes through. $1 \leq i \leq K$, $1 \leq k \leq K$, k and i are integers, K is a positive integer, and i is not equal to k.

Optionally, in an embodiment, the basic channel matrix has a nesting feature. The nesting feature means that a target channel matrix including elements associated with $K_1$ target beams is read from the basic channel matrix, and is included in a target channel matrix that includes elements associated with $K_2$ target beams is read from the basic channel matrix. The $K_2$ target beams include the $K_1$ target beams. $K1 < K2 \leq K$, and K1 and K2 are integers.

Optionally, in an embodiment, when the K beams use a same frequency band, the processing unit 1100 is specifically configured to:

read, from the basic channel matrix based on IDs of L target beams, elements associated with the L target beams, to obtain a target channel matrix. The elements associated with the target beam include elements in L columns corresponding to the IDs of the L target beams and in L rows corresponding to the IDs of the L target beams in the basic channel matrix. $L \geq 1$, and L is an integer.

Optionally, in an embodiment, there are N basic channel matrices. The N basic channel matrices may be used to precode K beams. When the K beams use N frequency bands, each of the N basic channel matrices corresponds to one frequency band of the N frequency bands. Sizes of the N basic channel matrices are all K rows and K columns. K is a positive integer.

The processing unit 1100 is specifically configured to:

read, from a basic channel matrix corresponding to each frequency band based on IDs of L target beams, an element associated with a target beam of the frequency band, to obtain a target channel matrix corresponding to the frequency band. The element associated with the target beam includes elements in P rows and P columns corresponding to IDs of P target beams in the basic channel matrix corresponding to each frequency band. $1 \leq P < L$, and P and L are integers.

Optionally, in an embodiment, there are N basic channel matrices. The N basic channel matrices may be used to precode K beams. When the K beams use N frequency bands, the N basic channel matrices respectively correspond to the N frequency bands. A size of a basic channel matrix corresponding to each frequency band of the N frequency bands is related to a quantity of beams of the frequency band. $N \geq 2$, and N is an integer.

The processing unit 1100 is specifically configured to:

separately read, from the N basic channel matrices corresponding to the N frequency bands based on IDs of L target beams, an element associated with a corresponding target beam, to obtain N target channel matrices. The N target channel matrices correspond to the N frequency bands. Each frequency band of the N frequency bands corresponds to some of the L target beams. A sum of quantities of target beams corresponding to the N frequency bands is L.

Optionally, in an embodiment, when the K beams use N frequency bands, each frequency band corresponds to some of the K beams. $N \geq 2$, and N is an integer.

The processing unit 1100 is specifically configured to:

separately read, from the basic channel matrix, an element associated with a target beam corresponding to each of the N frequency bands, to obtain N target channel matrices. The N target channel matrices correspond to the N frequency bands. The element associated with the target beam corresponding to each frequency band includes an element in a row corresponding to an ID of the target beam corresponding to the frequency band in the basic channel matrix and in a column corresponding to the ID of the target beam.

Optionally, in an embodiment, the receiving unit 1200 is configured to:

receive feedback information from the terminal device in M first beams. The feedback information indicates an evaluation parameter of large-scale channel information. $M \geq 1$, and M is an integer.

The processing unit 1100 is specifically configured to:

determine, based on the evaluation parameter of the large-scale channel information, an element associated with the M first beams in the one or more basic channel matrices, where the element associated with the M first beams comprises an element whose row index is an ID of any first beam in the M first beams and/or whose column index is an ID of any first beam in the M first beams in the one or more basic channel matrices; and output the one or more basic channel matrices.

Optionally, in an embodiment, the element in the one or more basic channel matrices is calculated based on the reference point of the beam.

The receiving unit 1200 is configured to:

receive first feedback information from the terminal device in the M first beams. The first feedback information indicates the evaluation parameter of the large-scale channel information. $M \geq 1$, and M is an integer.

The processing unit 1100 is specifically configured to:

correct, based on the evaluation parameter of the large-scale channel information, the element associated with the M first beams in the one or more basic channel matrices, to obtain the one or more corrected basic channel matrices, where the element associated with the M first beams comprises an element whose row index comprises the ID of the any first beam in the M first beams and/or whose column index comprises the ID of the any first beam in the M first beams in the one or more basic channel matrices; and read, based on the target beam, the element associated with the target beam from the corrected one or more basic channel matrices, and generating the one or more target channel matrices.

Optionally, in an embodiment, the processing unit 1100 is further configured to:

select the one or more basic channel matrices from prestored channel matrices based on satellite information. The prestored channel matrices are obtained through calculation based on the large-scale channel information. The satellite information includes one or more of a type, a communication elevation angle, and an orbit height of a satellite.

Optionally, in an embodiment, the receiving unit 1200 is further configured to:

receive second feedback information from the terminal device in one or more second beams. The second feedback information indicates an evaluation parameter of large-scale channel information.

The processing unit 1100 is further configured to:

calculate the one or more basic channel matrices based on the evaluation parameter of the large-scale channel information through online calculation or table lookup. In the table lookup manner, there is a correspondence between the evaluation parameter of the large-scale channel information and channel information of the basic channel matrix. The one or more basic channel matrices are obtained based on the correspondence and the evaluation parameter of the large-scale channel information that is indicated by the second feedback information.

Optionally, in an embodiment, the receiving unit 1200 is further configured to:

receive a correction coefficient from the terminal device. The correction coefficient is related to a moving speed of the terminal device.

The processing unit 1100 is further configured to:

calculate the one or more basic channel matrices through online calculation or table lookup based on the evaluation parameter of the large-scale channel information and the correction coefficient.

Optionally, in an embodiment, the evaluation parameter of the large-scale channel information includes one or more of a location parameter, an angle parameter, and a channel information parameter of the terminal device.

Optionally, in an embodiment, the receiving unit 1200 is specifically configured to:

receive one or more indication parameters from the terminal device. There is a correspondence between the one or more indication parameters and the correction coefficient, or the one or more indication parameters are used to calculate the correction coefficient.

The processing unit 1100 is further configured to:

determine the correction coefficient through table lookup based on the one or more indication parameters and the correspondence, or obtain the correction coefficient through calculation based on the one or more indication parameters.

Optionally, in an embodiment, the sending unit 1300 is further configured to:

sending precoding information to the terminal device. The precoding information indicates an ID of the target beam that needs to be precoded.

In the foregoing implementations, the receiving unit 1200 and the sending unit 1300 may also be integrated into one transceiver unit, and have both of a receiving function and a sending function. This is not limited herein.

Optionally, in an example, the communication apparatus 1000 may be a transmit end in the method embodiment. In this case, the receiving unit 1200 may be a receiver, and the sending unit 1300 may be a transmitter. Alternatively, the receiver and the transmitter may be integrated into a transceiver.

Optionally, in another example, the communication apparatus 1000 may be a chip or an integrated circuit installed in the transmit end. In this case, the receiving unit 1200 and the sending unit 1300 may be a communication interface or an interface circuit. For example, the receiving unit 1200 is an input interface or an input circuit, and the sending unit 1300 is an output interface or an output circuit.

In each example, the processing unit 1100 is configured to perform processing and/or operations implemented inside the network device in addition to sending and receiving actions.

For example, the processing and/or operations includes: precoding, reading an element associated with a target beam from a basic channel matrix and generating a target channel matrix, correcting the basic channel matrix based on an evaluation parameter of large-scale channel information, calculating the basic channel matrix online based on the large-scale channel information, and calculating the basic channel matrix based on a correction coefficient and the large-scale channel information.

Optionally, the processing unit 1100 may be a processing apparatus. A function of the processing apparatus may be implemented by hardware, or may be implemented by hardware executing corresponding software. For example, the processing apparatus may include at least one processor and at least one memory. The at least one memory is configured to store a computer program. The at least one processor reads and executes the computer program stored in the at least one memory, to enable the communication apparatus 1000 to perform operations and/or processing performed by the network device in the method embodiments.

Optionally, the processing apparatus may include only the processor, and the memory configured to store the computer program is located outside the processing apparatus. The processor is connected to the memory through a circuit/wire, to read and execute the computer program stored in the memory.

In some examples, the processing apparatus may alternatively be a chip or an integrated circuit. For example, the processing apparatus includes a processing circuit/logic circuit and an interface circuit. The interface circuit is configured to: receive a signal and/or data, and transmit the signal and/or the data to the processing circuit. The processing circuit processes the signal and/or the data, so that operations and/or processing performed by the network device in the method embodiments are/is performed.

FIG. 19 is a schematic block diagram of another communication apparatus according to this application. As shown in FIG. 19, a communication apparatus 2000 includes a processing unit 2100, a receiving unit 2200, and a sending unit 2300.

The processing unit 2100 is configured to obtain an evaluation parameter of large-scale channel information. The communication apparatus is located in a first beam. The first beam belongs to one of target beams. The target beam is a beam on which a network device performs precoding.

The sending unit 2300 is configured to send feedback information to a network device. The feedback information indicates an evaluation parameter of the large-scale channel information. The evaluation parameter of the large-scale channel information is used by the network device to determine an element associated with the first beam in one or more basic channel matrices. The element associated with the first beam in the one or more basic channel matrices includes an element whose row index is an ID of the first beam and/or whose column index is an ID of the first beam in the one or more basic channel matrices.

Optionally, in an embodiment, the element in the one or more basic channel matrices is calculated based on the reference point of the beam.

The evaluation parameter of the large-scale channel information is used by the network device to correct the element associated with the first beam in the one or more basic channel matrices.

Optionally, in an embodiment, the sending unit 2300 is further configured to:

send a correction coefficient to the network device. The correction coefficient is related to a moving speed of the terminal device.

That the evaluation parameter of the large-scale channel information is used by the network device to calculate the element associated with the first beam in the one or more basic channel matrices includes:

The evaluation parameter of the large-scale channel information and the correction coefficient are used by the network device to calculate the element associated with the first beam in the one or more basic channel matrices.

Optionally, in an embodiment, the evaluation parameter of the large-scale channel information includes one or more of a location parameter, an angle parameter, and a channel information parameter of the terminal device.

Optionally, in an embodiment, the sending unit 2300 is specifically configured to:

send one or more indication parameters to the network device. There is a correspondence between the one or more indication parameters and a value of the correction coefficient, or the one or more indication parameters are used to calculate the correction coefficient. The one or more correction coefficients are used by the network device to determine the correction coefficient.

In the foregoing implementations, the receiving unit 2200 and the sending unit 2300 may also be integrated into one transceiver unit, and have both of a receiving function and a sending function. This is not limited herein.

Optionally, in an example, the communication apparatus 2000 may be the terminal device in the method embodiment. In this case, the receiving unit 2200 may be a receiver, and the sending unit 2300 may be a transmitter. Alternatively, the receiver and the transmitter may be integrated into a transceiver.

Optionally, in another example, the communication apparatus 2000 may be a chip or an integrated circuit installed in a receive end. In this case, the receiving unit 2200 and the sending unit 2300 may be a communication interface or an interface circuit. For example, the receiving unit 2200 is an input interface or an input circuit, and the sending unit 2300 is an output interface or an output circuit.

In each example, the processing unit 2100 is configured to perform processing and/or operations implemented inside the terminal device in addition to sending and receiving actions.

Optionally, the processing unit 2100 may be a processing apparatus. A function of the processing apparatus may be implemented by hardware, or may be implemented by hardware executing corresponding software. For example, the processing apparatus may include at least one processor and at least one memory. The at least one memory is configured to store a computer program. The at least one processor reads and executes the computer program stored in the at least one memory, to enable the communication apparatus 2000 to perform operations and/or processing performed by the terminal device in the method embodiments.

Optionally, the processing apparatus may include only the processor, and the memory configured to store the computer program is located outside the processing apparatus. The processor is connected to the memory through a circuit/wire, to read and execute the computer program stored in the memory.

Optionally, in some examples, the processing apparatus may alternatively be a chip or an integrated circuit. For example, the processing apparatus includes a processing circuit/logic circuit and an interface circuit. The interface circuit is configured to: receive a signal and/or data, and transmit the signal and/or the data to the processing circuit. The processing circuit processes the signal and/or the data, so that operations performed by the terminal device in the method embodiments are performed.

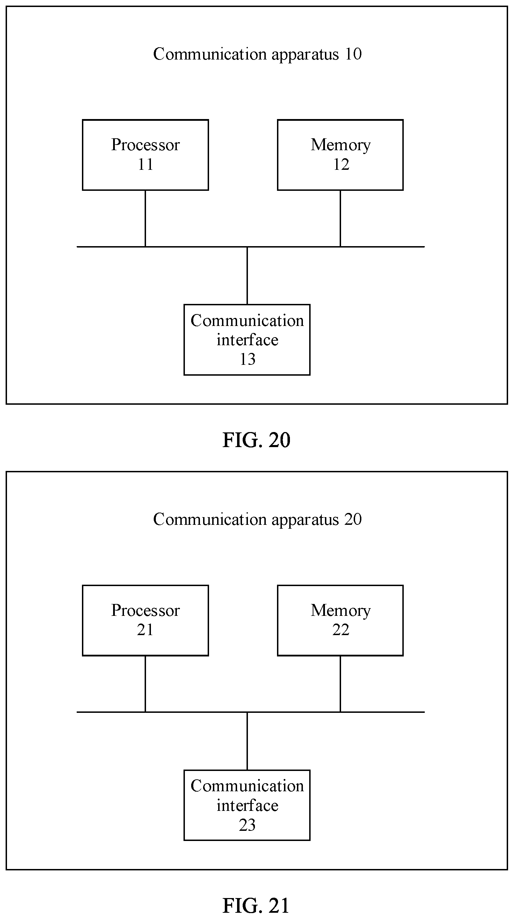

FIG. 20 is a schematic diagram depicting a structure of a communication apparatus according to an embodiment of this application; and As shown in FIG. 20, a communication apparatus 10 includes one or more processors 11, one or more memories 12, and one or more communication interfaces 13. The processor 11 is configured to control the communication interface 13 to receive and send a signal. The memory 12 is configured to store a computer program. The processor 11 is configured to invoke the computer program from the memory 12 and run the computer program, so that the communication apparatus 10 performs processing and/or operations performed by the network device in the method embodiments of this application.

For example, the processor 11 may have a function of the processing unit 1100 shown in FIG. 18, and the communication interface 13 may have functions of the receiving unit 1200 and/or the sending unit 1300 shown in FIG. 18. Specifically, the processor 11 may be configured to perform processing or operations performed inside the network device in FIG. 1 to FIG. 17. The communication interface 13 is configured to perform sending and/or receiving actions performed by the network device in FIG. 1 to FIG. 17.

In an implementation, the communication apparatus 10 may be the network device in the method embodiments. In this implementation, the communication interface 13 may be a transceiver. The transceiver may include a receiver and a transmitter. Optionally, the processor 11 may be a baseband apparatus, and the communication interface 13 may be a radio frequency apparatus. In another implementation, the communication apparatus 10 may be a chip or an integrated circuit installed in a network device. In this implementation, the communication interface 13 may be an interface circuit or an input/output interface.

FIG. 21 is a schematic diagram of a structure of another communication apparatus according to this application. As shown in FIG. 21, a communication apparatus 20 includes one or more processors 21, one or more memories 22, and one or more communication interfaces 23. The processor 21 is configured to control the communication interface 23 to receive and send a signal. The memory 22 is configured to store a computer program. The processor 21 is configured to invoke the computer program from the memory 22 and run the computer program, so that the communication apparatus 20 performs processing and/or operations performed by the terminal device in the method embodiments of this application.

For example, the processor 21 may have a function of the processing unit 2100 shown in FIG. 19, and the communication interface 23 may have functions of the receiving unit 2200 and/or the sending unit 2300 shown in FIG. 19. Specifically, the processor 21 may be configured to perform processing or operations performed inside the terminal device in FIG. 1 to FIG. 17. The communication interface 33 is configured to perform sending and/or receiving actions performed by the terminal device in FIG. 1 to FIG. 17.

In an implementation, the communication apparatus 20 may be the terminal device in the method embodiments. In this implementation, the communication interface 23 may be a transceiver. The transceiver may include a receiver and a transmitter. Optionally, the processor 21 may be a baseband apparatus, and the communication interface 23 may be a radio frequency apparatus. In another implementation, the communication apparatus 20 may be a chip or an integrated circuit installed in a terminal device. In this implementation, the communication interface 23 may be an interface circuit or an input/output interface.

Optionally, the memory and the processor in the foregoing apparatus embodiments may be physically independent units, or the memory may be integrated into the processor. This is not limited in this specification.

In addition, this application further provides a computer-readable storage medium. The computer-readable storage medium stores computer instructions. When the computer instructions are run on a computer, operations and/or procedures performed by the network device in the method embodiments of this application are performed.

This application further provides a computer-readable storage medium. The computer-readable storage medium stores computer instructions. When the computer instructions are run on a computer, operations and/or procedures performed by the terminal device in the method embodiments of this application are performed.

In addition, this application further provides a computer program product. The computer program product includes computer program code or instructions. When the computer program code or the instructions is/are run on a computer, operations and/or procedures performed by the network device in the method embodiments of this application are performed.

This application further provides a computer program product. The computer program product includes computer program code or instructions. When the computer program code or the instructions is/are run on a computer, operations and/or procedures performed by the terminal device in the method embodiments of this application are performed.

In addition, this application further provides a chip. The chip includes a processor. A memory configured to store a computer program is disposed independent of the chip. The processor is configured to execute the computer program stored in the memory, so that a network device in which the chip is installed performs the operation and/or processing performed by the network device in any method embodiment.

Further, the chip may include a communication interface. The communication interface may be an input/output interface, an interface circuit, or the like. Further, the chip may include the memory.

This application further provides a chip. The chip includes a processor. A memory configured to store a computer program is disposed independent of the chip. The processor is configured to execute the computer program stored in the memory, so that a terminal device in which the chip is installed performs the operation and/or processing performed by the terminal device in any method embodiment.

Further, the chip may include a communication interface. The communication interface may be an input/output interface, an interface circuit, or the like. Further, the chip may include the memory.

In addition, this application further provides a communication apparatus (for example, may be a chip), including a processor and a communication interface. The communication interface is configured to receive a signal and transmit the signal to the processor. The processor processes the signal, so that operations and/or processing performed by the network device in any method embodiment are performed.

This application further provides a communication apparatus (for example, may be a chip), including a processor and a communication interface. The communication interface is configured to receive a signal and transmit the signal to the processor. The processor processes the signal, so that operations and/or processing performed by the terminal device in any method embodiment are performed.

In addition, this application further provides a communication apparatus, including at least one processor, where the at least one processor is coupled to at least one memory, and the at least one processor is configured to execute a computer program or instructions stored in the at least one memory, so that operations and/or processing performed by the network device in any method embodiment are performed.

This application further provides a communication apparatus, including at least one processor, where the at least one processor is coupled to at least one memory, and the at least one processor is configured to execute a computer program or instructions stored in the at least one memory, so that operations and/or processing performed by the terminal device in any method embodiment are performed.

In addition, this application further provides a communication device, including a processor, a memory, and a transceiver. The memory is configured to store a computer program. The processor is configured to: invoke and run the computer program stored in the memory, and control the transceiver to receive/send a signal, so that the network device performs the operation and/or processing performed by the network device in any method embodiment.

This application further provides a communication device, including a processor, a memory, and a transceiver. The memory is configured to store a computer program. The processor is configured to: invoke and run the computer program stored in the memory, and control the transceiver to receive and send a signal, so that the network device performs operations and/or processing performed by the terminal device in any method embodiment.

In addition, this application further provides a wireless communication system, including the network device in the embodiments of this application. The wireless communication system may implement the open-loop precoding method in embodiments of this application.

Optionally, the wireless communication system may further include the terminal device in embodiments of this application. The wireless communication system may implement the closed-loop precoding method in embodiments of this application.

A processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

A memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each unit may exist alone physically, or two or more units may be integrated into one unit. When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A precoding method in a satellite communication system, comprising:

   reading, based on a target beam, an element associated with the target beam from one or more basic channel matrices, and generating one or more target channel matrices, wherein the target beam is a beam that needs to be precoded, and the one or more basic channel matrices are obtained through calculation based on large-scale channel information;
   generating a precoding matrix based on the one or more target channel matrices, and precoding, by using the precoding matrix, a downlink signal corresponding to the target beam; and
   sending the precoded downlink signal.

2. The method according to claim 1, wherein there is one basic channel matrix, the basic channel matrix comprises elements in K rows and K columns, the basic channel matrix may be used for precoding of K beams, the K rows of the basic channel matrix respectively correspond to channels of a terminal device in the K beams, an element $h_{kk}$ in the basic channel matrix represents a channel through which a wanted signal that needs to be received by a $k^{th}$ terminal device on a $k^{th}$ beam passes, $h_{ki}$ represents a channel through which an interference signal generated by an $i^{th}$ beam for a terminal device in the $k^{th}$ beam passes, $1 \leq i \leq K$, $1 \leq k \leq K$, k and i are integers, K is a positive integer, and i is not equal to k.

3. The method according to claim 2, wherein the target channel matrix that comprises elements associated with $K_1$ target beams and that is read from the basic channel matrix is comprised in a target channel matrix that comprises elements associated with $K_2$ target beams and that is read from the basic channel matrix, wherein the $K_2$ target beams comprise the $K_1$ target beams, $K_1 < K_2 \leq K$, and $K_1$ and $K_2$ are integers.

4. The method according to claim 2 or 3, wherein when the K beams use a same frequency band,
   the reading, based on a target beam, an element associated with the target beam from one or more basic channel matrices, and generating one or more target channel matrices comprises:
   reading, from the basic channel matrix based on IDs of L target beams, elements associated with the L target beams, to obtain a target channel matrix, wherein the elements associated with the target beam comprise elements in L columns corresponding to the IDs of the L target beams and in L rows corresponding to the IDs of the L target beams in the basic channel matrix, $L \geq 2$, and L is an integer.

5. The method according to claim 1, wherein there are N basic channel matrices, the N basic channel matrices may be used to precode K beams, when the K beams use N frequency bands, each of the N basic channel matrices corresponds to one frequency band of the N frequency bands, sizes of the N basic channel matrices are all K rows and K columns, and K is a positive integer; and
   the reading, based on a target beam, an element associated with the target beam from one or more basic channel matrices, and generating one or more target channel matrices comprises:

reading, from a basic channel matrix corresponding to each frequency band based on IDs of L target beams, an element associated with a target beam of the frequency band, to obtain a target channel matrix corresponding to the frequency band, wherein the element associated with the target beam comprises elements in P rows and P columns corresponding to IDs of P target beams in the basic channel matrix corresponding to each frequency band, $1 \leq P < L$, $L \geq 2$, and P and L are integers.

6. The method according to claim 1, wherein there are N basic channel matrices, the N basic channel matrices may be used to precode K beams, when the K beams use N frequency bands, the N basic channel matrices respectively correspond to the N frequency bands, a size of a basic channel matrix corresponding to each frequency band of the N frequency bands is related to a quantity of beams of the corresponding frequency band, $N \geq 2$, and N is an integer; and

the reading, based on a target beam, an element associated with the target beam from one or more basic channel matrices, and generating one or more target channel matrices comprises:

separately reading, from the N basic channel matrices corresponding to the N frequency bands based on IDs of L target beams, an element associated with a corresponding target beam, to obtain N target channel matrices, wherein the N target channel matrices correspond to the N frequency bands, each frequency band of the N frequency bands corresponds to some of the L target beams, and a sum of quantities of target beams corresponding to the N frequency bands is L.

7. The method according to claim 2 or 3, wherein when the K beams use N frequency bands, each frequency band corresponds to some of the K beams, $N \geq 2$, and N is an integer; and

the reading, based on a target beam, an element associated with the target beam from or one more basic channel matrices, and generating one or more target channel matrices comprises:

separately reading, from the basic channel matrix, an element associated with a target beam corresponding to each of the N frequency bands, to obtain N target channel matrices, wherein the N target channel matrices correspond to the N frequency bands, and the element associated with the target beam corresponding to each frequency band comprises an element in a row corresponding to an ID of the target beam corresponding to the frequency band in the basic channel matrix and in a column corresponding to the ID of the target beam.

8. The method according to any one of claims 1 to 7, wherein before the reading, based on a target beam, an element associated with the target beam from one or more basic channel matrices, and generating one or more target channel matrices, the method further comprises:

receiving feedback information from the terminal device in M first beams, wherein the feedback information indicates an evaluation parameter of large-scale channel information, $M \geq 1$, and M is an integer; determining, based on the evaluation parameter of the large-scale channel information, an element associated with the M first beams in the one or more basic channel matrices, wherein the element associated with the M first beams comprises an element whose row index is an ID of any first beam in the M first beams and/or whose column index is an ID of any first beam in the M first beams in the one or more basic channel matrices; and outputting the one or more basic channel matrices.

9. The method according to claim 8, wherein the element in the one or more basic channel matrices is calculated based on a reference point of a beam;

the receiving feedback information from the terminal device in M first beams, wherein the feedback information indicates an evaluation parameter of large-scale channel information comprises: receiving first feedback information from the terminal device in the M first beams, wherein the first feedback information indicates the evaluation parameter of the large-scale channel information, $M \geq 1$, and M is an integer; the determining, based on the evaluation parameter of the large-scale channel information, an element associated with the M first beams in the one or more basic channel matrices comprises: correcting, based on the evaluation parameter of the large-scale channel information, the element associated with the M first beams in the one or more basic channel matrices, to obtain the one or more corrected basic channel matrices, wherein the element associated with the M first beams comprises an element whose row index comprises the ID of the any first beam in the M first beams and/or whose column index comprises the ID of the any first beam in the M first beams in the one or more basic channel matrices; and the reading, based on a target beam, an element associated with the target beam from or one more basic channel matrices, and generating one or more target channel matrices comprises: reading, based on the target beam, the element associated with the target beam from the corrected one or more basic channel matrices, and generating the one or more target channel matrices.

10. The method according to any one of claims 1 to 7, wherein the method further comprises:

receiving second feedback information from the terminal device in one or more second beams, wherein the second feedback information indicates an evaluation parameter of large-scale channel information; and calculating the one or more basic channel matrices based on the evaluation parameter of the large-scale channel information through online calculation or table lookup, wherein in the table lookup manner, there is a correspondence between the evaluation parameter of the large-scale channel information and channel information of the basic channel matrix, and the one or more basic channel matrices are obtained based on the correspondence and the evaluation parameter of the large-scale channel information that is indicated by the second feedback information.

11. The method according to any one of claims 1 to 10, wherein the method further comprises:
selecting the one or more basic channel matrices from prestored channel matrices based on satellite information, wherein the prestored channel matrices are obtained through calculation based on the large-scale channel information, and the satellite information comprises one or more of a type, a communication elevation angle, and an orbit height of a satellite.

12. The method according to any one of claims 8 to 11, wherein the method further comprises:

receiving a correction coefficient from the terminal device, wherein the correction coefficient is related to a moving speed of the terminal device; and
the determining, based on the evaluation parameter of the large-scale channel information, an element associated with the M first beams in the one or more basic channel matrices comprises:
determining, based on the evaluation parameter of the large-scale channel information and the correction coefficient, the element associated with the M first beams in the one or more basic channel matrices.

13. The method according to any one of claims 8 to 12, wherein the evaluation parameter of the large-scale channel information comprises one or more of a location parameter, an angle parameter, and a channel information parameter of the terminal device.

14. The method according to claim 12 or 13, wherein the receiving a correction coefficient from the terminal device comprises:

receiving one or more indication parameters from the terminal device, wherein there is a correspondence between the one or more indication parameters and a value of the correction coefficient, or the one or more indication parameters are used to calculate the correction coefficient; and
the method further comprises:
determining the correction coefficient through table lookup based on the one or more indication parameters and the correspondence, or obtaining the correction coefficient through calculation based on the one or more indication parameters.

15. A precoding method in a satellite communication system, comprising:

obtaining, by a terminal device, large-scale channel information, wherein the terminal device is located in a first beam, the first beam belongs to one of target beams, and the target beam is a beam on which a network device performs precoding; and
sending, by the terminal device, first feedback information to the network device, wherein the first feedback information indicates an evaluation parameter of the large-scale channel information, the evaluation parameter of the large-scale channel information is used by the network device to calculate an element associated with the first beam in one or more basic channel matrices, and the element associated with the first beam in the one or more basic channel matrices comprises an element whose row index is an ID of the first beam and/or whose column index is an ID of the first beam in the one or more basic channel matrices.

16. The method according to claim 15, wherein the element in the one or more basic channel matrices is calculated based on a reference point of a beam; and
the evaluation parameter of the large-scale channel information is used by the network device to correct the element associated with the first beam in the one or more basic channel matrices.

17. The method according to claim 15 or 16, wherein the method further comprises:

sending, by the terminal device, a correction coefficient to the network device, wherein the correction coefficient is related to a moving speed of the terminal device; and

that the evaluation parameter of the large-scale channel information is used by the network device to calculate the element associated with the first beam in the one or more basic channel matrices comprises:

the evaluation parameter of the large-scale channel information and the correction coefficient are used by the network device to calculate the element associated with the first beam in the one or more basic channel matrices.

18. The method according to any one of claims 15 to 17, wherein the evaluation parameter of the large-scale channel information comprises a location parameter, an angle parameter, or a channel information parameter of the terminal device.

19. The method according to claim 17 or 18, wherein the sending, by the terminal device, a correction coefficient to the network device comprises:

sending, by the terminal device, one or more indication parameters to the network device, wherein there is a correspondence between the one or more indication parameters and a value of the correction coefficient, or the one or more indication parameters are used by the network device to calculate the correction coefficient.

20. A communication apparatus, comprising:

a processing unit, configured to obtain large-scale channel information, wherein the communication apparatus is located in a first beam, the first beam belongs to one of target beams, and the target beam is a beam on which a network device performs precoding; and

a sending unit, configured to send first feedback information to the network device, wherein the first feedback information indicates an evaluation parameter of the large-scale channel information, the evaluation parameter of the large-scale channel information is used by the network device to calculate an element associated with the first beam in one or more basic channel matrices, and the element associated with the first beam in the one or more basic channel matrices comprises an element whose row index is an ID of the first beam and/or whose column index is an ID of the first beam in the one or more basic channel matrices.

21. The communication apparatus according to claim 20, wherein the element in the one or more basic channel matrices is calculated based on a reference point of a beam; and

the evaluation parameter of the large-scale channel information is used by the network device to correct the element associated with the first beam in the one or more basic channel matrices.

22. The communication apparatus according to claim 20 or 21, wherein the sending unit is further configured to:

send a correction coefficient to the network device, wherein the correction coefficient is related to a moving speed of the communication apparatus; and

that the evaluation parameter of the large-scale channel information is used by the network device to calculate the element associated with the first beam in the one or more basic channel matrices comprises:

the evaluation parameter of the large-scale channel information and the correction coefficient are used by the network device to calculate the element associated with the first beam in the one or more basic channel matrices.

23. The communication apparatus according to any one of claims 20 to 22, wherein the evaluation parameter of the large-scale channel information comprises a location parameter, an angle parameter, or a channel information parameter of the communication apparatus.

24. The communication apparatus according to claim 22 or 23, wherein the sending unit is specifically configured to:
send one or more indication parameters to the network device, wherein there is a correspondence between the one or more indication parameters and a value of the correction coefficient, or the one or more indication parameters are used by the network device to calculate the correction coefficient.

25. A communication apparatus, comprising:

a processing unit, configured to: read, based on a target beam, an element associated with the target beam from one or more basic channel matrices, and generate one or more target channel matrices, wherein the target beam is a beam that needs to be precoded, and the one or more basic channel matrices are obtained through calculation based on large-scale channel information; and

generate a precoding matrix based on the one or more target channel matrices, and precodes, by using the precoding matrix, a downlink signal corresponding to the target beam; and

a sending unit, configured to send the precoded downlink signal.

26. The communication apparatus according to claim 25, wherein there is one basic channel matrix, the basic channel matrix comprises elements in K rows and K columns, the basic channel matrix may be used for precoding of K beams, the K rows of the basic channel matrix respectively correspond to channels of a terminal device in the K beams, an element $h_{kk}$ in the basic channel matrix represents a channel through which a wanted signal that needs to be received by a $k^{th}$ terminal device on a $k^{th}$ beam passes, $h_{ki}$ represents a channel through which an interference signal generated by an $i^{th}$ beam for a terminal device in the $k^{th}$ beam passes, $1 \leq i \leq K$, $1 \leq k \leq K$, k and i are integers, K is a positive integer, and i is not equal to k.

27. The communication apparatus according to claim 26, wherein the target channel matrix that comprises elements associated with $K_1$ target beams and that is read by the processing unit from the basic channel matrix is comprised in a target channel matrix that comprises elements associated with $K_2$ target beams and that is read from the basic channel matrix, wherein the $K_2$ target beams comprise the $K_1$ target beams, $K_1 < K_2 \leq K$, and $K_1$ and $K_2$ are integers.

28. The communication apparatus according to claim 26 or 27, wherein when the K beams use a same frequency band, the processing unit is specifically configured to:

read, from the basic channel matrix based on IDs of L target beams, elements associated with the L target beams, to obtain a target channel matrix, wherein the elements associated with the target beam comprise elements in L columns corresponding to the IDs of the L target beams and in L rows corresponding to the IDs of the L target beams in the basic channel matrix, $L \geq 2$, and L is an integer.

29. The communication apparatus according to claim 25, wherein there are N basic channel matrices, the N basic channel matrices may be used to precode K beams, when the K beams use N frequency bands, each of the N basic channel matrices corresponds to one frequency band of the N frequency bands, sizes of the N basic channel matrices are all K rows and K columns, and K is a positive integer; and

the processing unit is specifically configured to:

read, from a basic channel matrix corresponding to each frequency band based on IDs of L target beams, an element associated with a target beam of the frequency band, to obtain a target channel matrix corresponding to the frequency band, wherein the element associated with the target beam comprises elements in P rows and P columns corresponding to IDs of P target beams in the basic channel matrix corresponding to each frequency band, $1 \leq P < L$, $L \geq 2$, and P and L are integers.

30. The communication apparatus according to claim 25, wherein there are N basic channel matrices, the N basic channel matrices may be used to precode K beams, when the K beams use N frequency bands, the N basic channel matrices respectively correspond to the N frequency bands, a size of a basic channel matrix corresponding to each frequency band of the N frequency bands is related to a quantity of beams of the corresponding frequency band, $N \geq 2$, and N is an integer; and

the processing unit is specifically configured to:

separately read, from the N basic channel matrices corresponding to the N frequency bands based on IDs of L target beams, an element associated with a corresponding target beam, to obtain N target channel matrices, wherein the N target channel matrices correspond to the N frequency bands, each frequency band of the N frequency bands corresponds to some of the L target beams, and a sum of quantities of target beams corresponding to the N frequency bands is L.

31. The communication apparatus according to claim 26 or 27, wherein when the K beams use N frequency bands, each frequency band corresponds to some of the K beams, $N \geq 2$, and N is an integer; and

the processing unit is specifically configured to:

separately read, from the basic channel matrix, an element associated with a target beam corresponding to each of the N frequency bands, to obtain N target channel matrices, wherein the N target channel matrices correspond to the N frequency bands, and the element associated with the target beam corresponding to each frequency band comprises an element in a row corresponding to an ID of the target beam corresponding to the frequency band in the basic channel matrix and in a column corresponding to the ID of the target beam.

**32.** The communication apparatus according to any one of claims 25 to 31, wherein the communication apparatus further comprises:

a receiving unit, configured to receive feedback information from the terminal device in M first beams, wherein the feedback information indicates an evaluation parameter of large-scale channel information, $M \geq 1$, and M is an integer;
the processing unit is specifically configured to determine, based on the evaluation parameter of the large-scale channel information, an element associated with the M first beams in the one or more basic channel matrices, wherein the element associated with the M first beams comprises an element whose row index is an ID of any first beam in the M first beams and/or whose column index is an ID of any first beam in the M first beams in the one or more basic channel matrices; and
the sending unit is further configured to output the one or more basic channel matrices.

**33.** The communication apparatus according to claim 31, wherein the element in the one or more basic channel matrices is calculated based on a reference point of a beam; and

the receiving unit is specifically configured to receive first feedback information from the terminal device in the M first beams, wherein the first feedback information indicates the evaluation parameter of the large-scale channel information, $M \geq 1$, and M is an integer; and
the processing unit is specifically configured to:

correct, based on the evaluation parameter of the large-scale channel information, the element associated with the M first beams in the one or more basic channel matrices, to obtain the one or more corrected basic channel matrices, wherein the element associated with the M first beams comprises an element whose row index comprises the ID of the any first beam in the M first beams and/or whose column index comprises the ID of the any first beam in the M first beams in the one or more basic channel matrices; and
read, based on the target beam, the element associated with the target beam from the corrected one or more basic channel matrices, and generating the one or more target channel matrices.

**34.** The communication apparatus according to any one of claims 25 to 31, wherein the communication apparatus further comprises:

a receiving unit, configured to receive second feedback information from the terminal device in one or more second beams, wherein the second feedback information indicates an evaluation parameter of large-scale channel information; and
the processing unit is specifically configured to calculate the one or more basic channel matrices based on the evaluation parameter of the large-scale channel information through online calculation or table lookup, wherein in the table lookup manner, there is a correspondence between the evaluation parameter of the large-scale channel information and channel information of the basic channel matrix, and the one or more basic channel matrices are obtained based on the correspondence and the evaluation parameter of the large-scale channel information that is indicated by the second feedback information.

**35.** The communication apparatus according to any one of claims 25 to 34, wherein the processing unit is further configured to:
select the one or more basic channel matrices from prestored channel matrices, wherein the prestored channel matrices are obtained through calculation based on the large-scale channel information, and the satellite information comprises one or more of a type, a communication elevation angle, and an orbit height of a satellite.

**36.** The communication apparatus according to any one of claims 32 to 35, wherein the receiving unit is further configured to:

receive a correction coefficient from the terminal device, wherein the correction coefficient is related to a moving speed of the terminal device; and
the processing unit is specifically configured to:
determine, based on the evaluation parameter of the large-scale channel information and the correction coefficient, the element associated with the M first beams in the one or more basic channel matrices.

37. The communication apparatus according to any one of claims 32 to 36, wherein the evaluation parameter of the large-scale channel information comprises one or more of a location parameter, an angle parameter, and a channel information parameter of the terminal device.

38. The communication apparatus according to claim 36 or 37, wherein the receiving unit is specifically configured to receive one or more indication parameters from the terminal device, there is a correspondence between the one or more indication parameters and a value of the correction coefficient, or the one or more indication parameters are used to calculate the correction coefficient; and
the processing unit is further configured to:
determine the correction coefficient through table lookup based on the one or more indication parameters and the correspondence, or obtaining the correction coefficient through calculation based on the one or more indication parameters.

39. A communication apparatus, comprising at least one processor, wherein the at least one processor is coupled to at least one memory, and the at least one processor is configured to execute a computer program or instructions stored in the at least one memory, so that the communication apparatus performs the method according to any one of claims 1 to 14, or the communication apparatus performs the method according to any one of claims 15 to 19.

40. A communication apparatus, comprising a processing circuit and a communication interface, wherein the communication interface is configured to: receive to-be-processed data and/or information, and transmit the to-be-processed data and/or information to the processing circuit, and the processing circuit is configured to perform the method according to any one of claims 1 to 14, or the processing circuit is configured to perform the method according to any one of claims 15 to 19.

41. A computer-readable storage medium, wherein the computer-readable storage medium stores computer instructions, and when the computer instructions are run on a computer, the method according to any one of claims 1 to 14 is implemented, or the method according to any one of claims 15 to 19 is implemented.

42. A computer program product, wherein the computer program product comprises computer program code, and when the computer program code is run on a computer, the method according to any one of claims 1 to 14 is implemented, or the method according to any one of claims 15 to 19 is implemented.

43. A computer program, wherein when the computer program is run on a computer, the method according to any one of claims 1 to 14 or the method according to any one of claims 15 to 19 is implemented.

44. A communication system, comprising the communication apparatus according to any one of claims 20 to 24 and the communication apparatus according to any one of claims 25 to 38.

FIG. 1

FIG. 2

200

| A network device reads, based on a target beam, an element associated with the target beam from one or more basic channel matrices, and generates one or more target channel matrices, where the one or more basic channel matrices are obtained through calculation based on large-scale channel information | 210 |

| The network device generates a precoding matrix based on the one or more target channel matrices, and precodes, based on the precoding matrix, a downlink signal corresponding to the target beam | 220 |

| Send the precoded downlink signal | 230 |

FIG. 3

Beam 9
Beam 8     Beam 10
Beam 19   Beam 2    Beam 11
Beam 7    Beam 3
Beam 18   Beam 1    Beam 12
Beam 6    Beam 4
Beam 17   Beam 5    Beam 13
Beam 16   Beam 14
Beam 15

FIG. 4

FIG. 5

| Broadcast, in L beams, IDs of beams that currently need to be precoded together | ⟳ 301 |

| Select a basic channel matrix M (dimension K·K) | ⟳ 302 |

| Read elements corresponding to L target beams from M, to obtain a target channel matrix P (dimension L·L) | ⟳ 303 |

| Generate a precoding matrix W (dimension L·L) based on the target channel matrix | ⟳ 304 |

| Precode a downlink signal based on W | ⟳ 305 |

FIG. 6

FIG. 7

$$H_1 = \begin{bmatrix} h_{11} & h_{12} & h_{13} & h_{14} & h_{15} & h_{16} & h_{17} & h_{18} & h_{19} & \cdots & h_{1K} \\ h_{21} & h_{22} & h_{23} & h_{24} & h_{25} & h_{26} & h_{27} & h_{28} & h_{29} & \cdots & h_{2K} \\ h_{31} & h_{32} & h_{33} & h_{34} & h_{35} & h_{36} & h_{37} & h_{38} & h_{39} & \cdots & h_{3K} \\ h_{41} & h_{42} & h_{43} & h_{44} & h_{45} & h_{46} & h_{47} & h_{48} & h_{49} & \cdots & h_{4K} \\ h_{51} & h_{52} & h_{53} & h_{54} & h_{55} & h_{56} & h_{57} & h_{58} & h_{59} & \cdots & h_{5K} \\ h_{61} & h_{62} & h_{63} & h_{64} & h_{65} & h_{66} & h_{67} & h_{68} & h_{69} & \cdots & h_{6K} \\ h_{71} & h_{72} & h_{73} & h_{74} & h_{75} & h_{76} & h_{77} & h_{78} & h_{79} & \cdots & h_{7K} \\ h_{81} & h_{82} & h_{83} & h_{84} & h_{85} & h_{86} & h_{87} & h_{88} & h_{89} & \cdots & h_{8K} \\ h_{91} & h_{92} & h_{93} & h_{94} & h_{95} & h_{96} & h_{97} & h_{98} & h_{99} & \cdots & h_{9K} \\ & & & \cdots & & & & \cdots & & & \\ h_{K1} & h_{K2} & h_{K3} & h_{K4} & h_{K5} & h_{K6} & h_{K7} & h_{K8} & h_{K9} & \cdots & h_{KK} \end{bmatrix}$$

$$H_{13} = \begin{bmatrix} h_{3,3} & h_{3,5} & h_{3,7} & h_{3,9} & h_{3,13} & h_{3,17} \\ h_{5,3} & h_{5,5} & h_{5,7} & h_{5,9} & h_{5,13} & h_{5,17} \\ h_{7,3} & h_{7,5} & h_{7,7} & h_{7,9} & h_{7,13} & h_{7,17} \\ h_{9,3} & h_{9,5} & h_{9,7} & h_{9,9} & h_{9,13} & h_{9,17} \\ h_{13,3} & h_{13,5} & h_{13,7} & h_{13,9} & h_{13,13} & h_{13,17} \\ h_{17,3} & h_{17,5} & h_{17,7} & h_{17,9} & h_{17,13} & h_{17,17} \end{bmatrix}$$

$$H_{12} = \begin{bmatrix} h_{2,2} & h_{2,4} & h_{2,6} & h_{2,11} & h_{2,15} & h_{2,19} \\ h_{4,2} & h_{4,4} & h_{4,6} & h_{4,11} & h_{4,15} & h_{4,19} \\ h_{6,2} & h_{6,4} & h_{6,6} & h_{6,11} & h_{6,15} & h_{6,19} \\ h_{11,2} & h_{11,4} & h_{11,6} & h_{11,11} & h_{11,15} & h_{11,19} \\ h_{15,2} & h_{15,4} & h_{15,6} & h_{15,11} & h_{15,15} & h_{15,19} \\ h_{19,2} & h_{19,4} & h_{19,6} & h_{19,11} & h_{19,15} & h_{19,19} \end{bmatrix}$$

$$H_{11} = \begin{bmatrix} h_{1,1} & h_{1,8} & h_{1,10} & h_{1,12} & h_{1,14} & h_{1,16} & h_{1,18} \\ h_{8,1} & h_{8,8} & h_{8,10} & h_{8,12} & h_{8,14} & h_{8,16} & h_{8,18} \\ h_{10,1} & h_{10,8} & h_{10,10} & h_{10,12} & h_{10,14} & h_{10,16} & h_{10,18} \\ h_{12,1} & h_{12,8} & h_{12,10} & h_{12,12} & h_{12,14} & h_{12,16} & h_{12,18} \\ h_{14,1} & h_{14,8} & h_{14,10} & h_{14,12} & h_{14,14} & h_{14,16} & h_{14,18} \\ h_{16,1} & h_{16,8} & h_{16,10} & h_{16,12} & h_{16,14} & h_{16,16} & h_{16,18} \\ h_{18,1} & h_{18,8} & h_{18,10} & h_{18,12} & h_{18,14} & h_{18,16} & h_{18,18} \end{bmatrix}$$

FIG. 8

40

Separately broadcast, in L beams with a same color, IDs of beams on which precoding is currently performed together $\quad \sim$ 401

Select a basic channel matrix M (K×K) $\quad \sim$ 402

Separately select target channel matrices $H_{11}$ ($L_1$×$L_1$), $H_{12}$ ($L_2$×$L_2$) and $H_{13}$ ($L_3$×$L_3$) corresponding to each color $\quad \sim$ 403

Separately generate precoding matrices $W_1$ ($L_1$×$L_1$), $W_2$ ($L_2$×$L_2$), $W_3$ ($L_3$×$L_3$) $\quad \sim$ 404

Precode, based on $W_1$, $W_2$, and $W_3$, downlink signals corresponding to beams in different colors $\quad \sim$ 405

FIG. 9

500

```
┌─────────────────────┐                          ┌─────────────────────┐
│   Network device    │                          │   Terminal device   │
└─────────────────────┘                          └─────────────────────┘
           │                                                 │
┌──────────────────────────────────────────┐                │
│ 501: Define a basic channel matrix based  │                │
│ on a reference point of a beam and        │                │
│ information about a satellite             │                │
└──────────────────────────────────────────┘                │
           │                                                 │
           │◄──── 502: First feedback information, indicating an evaluation
           │         parameter of large-scale channel information
           │                                                 │
┌──────────────────────────────────────────┐                │
│ 503: Correct an element in the basic      │                │
│ channel matrix based on the evaluation    │                │
│ parameter that is of the large-scale      │                │
│ channel information, to obtain a          │                │
│ corrected basic channel matrix            │                │
└──────────────────────────────────────────┘                │
           │                                                 │
┌──────────────────────────────────────────┐                │
│ 504: Read a target channel matrix from    │                │
│ the corrected basic channel matrix, and   │                │
│ generate a precoding matrix based on the  │                │
│ target channel matrix                     │                │
└──────────────────────────────────────────┘                │
           │                                                 │
┌──────────────────────────────────────────┐                │
│ 505: Precode a downlink signal based on   │                │
│ the precoding matrix                      │                │
└──────────────────────────────────────────┘                │
           │                                                 │
```

FIG. 10

FIG. 11

FIG. 12

600

```
┌─────────────────┐                              ┌─────────────────┐
│ Network device  │                              │ Terminal device │
└─────────────────┘                              └─────────────────┘
```

601: Broadcast target beams that
needs to be precoded together

602: Resource configuration

603: Report configuration

604: First feedback information, indicating an evaluation
parameter of large-scale channel information

605: Correct an element in a basic channel matrix based on
the evaluation parameter that is of the large-scale channel
information, to obtain a corrected basic channel matrix

606: Adjust parameter configurations of a physical layer and a
MAC layer, and adjust an antenna configuration, transmit
power, and the like

607: Downlink a signal

608: Obtain the precoding matrix based on the evaluation
parameter of the large-scale channel information and the
target beam, and decode the received downlink signal based
on the precoding matrix

FIG. 13

FIG. 14

700

```
┌──────────────────┐                                    ┌──────────────────┐
│  Network device  │                                    │  Terminal device │
└──────────────────┘                                    └──────────────────┘
```

701: ID of a target beam

702: Resource configuration

703: Report configuration

704: Second feedback information, indicating an
evaluation parameter of large-scale channel information

705: Estimate a channel matrix through online
calculation or table lookup, and obtain a precoding
matrix through calculation

706: Adjust parameter configurations of a physical layer and a
MAC layer, and adjust an antenna configuration, transmit power,
and the like

707: Precode a downlink signal based on the
precoding matrix

708: Precoded downlink signal

709: Estimate the precoding matrix based on the ID of
the target beam, and decode the received downlink signal
by using the precoding matrix

FIG. 15

800

| Network device | | Terminal device |

801: ID of a target beam on which precoding is used →

802: Resource configuration →

803: Report configuration →

← 804: An evaluation parameter and a modification coefficient
that are used to indicate large-scale channel information

805: Estimate a channel matrix through online calculation or table lookup
by using the correction coefficient, and calculate a precoding matrix

806: Adjust parameter configurations of a physical layer and a
MAC layer, and adjust an antenna configuration, transmit
power, and the like

807: Precode a downlink signal based on the
precoding matrix

808: Precoded downlink signal →

809: Calculate the precoding matrix based on the correction
coefficient and the ID of the target beam, and decode the
downlink signal by using the precoding matrix

FIG. 16

EP 4 184 807 A1

GEO Ka band Elevation angle is 45° A total quantity of
beams is 61 A quantity of target beams is 19

Throughput gain percentage (%)

Small-scale channel information delay (ms)

Performance of performing
precoding based on only a large-
scale channel

Performance of conventional
precoding based on specific channel
information fed back by a user

FIG. 17

Communication apparatus 1000

Processing unit 1100

Receiving unit 1200

Sending unit 1300

FIG. 18

Communication apparatus 2000

Processing unit 2100

Receiving unit 2200

Sending unit 2300

FIG. 19

Communication apparatus 10

Processor
11

Memory
12

Communication
interface
13

FIG. 20

Communication apparatus 20

Processor
21

Memory
22

Communication
interface
23

FIG. 21

# EP 4 184 807 A1

<table>
<tr><td colspan="2"><strong>INTERNATIONAL SEARCH REPORT</strong></td><td>International application No.<br><strong>PCT/CN2021/104620</strong></td></tr>
</table>

**A. CLASSIFICATION OF SUBJECT MATTER**

H04B 7/185(2006.01)i; H04B 7/0456(2017.01)i

According to International Patent Classification (IPC) or to both national classification and IPC

**B. FIELDS SEARCHED**

Minimum documentation searched (classification system followed by classification symbols)

H04B; H04W

Documentation searched other than minimum documentation to the extent that such documents are included in the fields searched

Electronic data base consulted during the international search (name of data base and, where practicable, search terms used)

VEN; CNABS; CNTXT; USTXT; WOTXT; EPTXT; CNKI; 3GPP; IEEE: 卫星, 非地面, 非陆地, 网络, 通信, 波束, 预编码, 矩阵, 信道, 元素, 下行, 开环, 闭环, 反馈, 大尺度, 路径损耗, satellite, NTN, non?terrestrial, beam, pre?cod???, matrix, matrice, element, closed loop, feedback, large scale, channel, path loss

**C. DOCUMENTS CONSIDERED TO BE RELEVANT**

| Category* | Citation of document, with indication, where appropriate, of the relevant passages | Relevant to claim No. |
|---|---|---|
| X | CN 110557797 A (ASIA SATELLITE TELECOMMUNICATIONS COMPANY LIMITED) 10 December 2019 (2019-12-10) description, paragraphs [0028]-[0096], and figures 1-11 | 1, 10, 11, 25, 34, 35, 39-43 |
| A | WO 2009036814 A1 (FUNDACIO PRIVADA CT TECNOLOGIC et al.) 26 March 2009 (2009-03-26) entire document | 1-44 |
| A | CN 102792605 A (LG ELECTRONICS INC.) 21 November 2012 (2012-11-21) entire document | 1-44 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 September 2021** | **15 September 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/104620**

| Patent document cited in search report | | | Publication date (day/month/year) | Patent family member(s) | | | Publication date (day/month/year) |
|---|---|---|---|---|---|---|---|
| CN | 110557797 | A | 10 December 2019 | US | 10291315 | B1 | 14 May 2019 |
| WO | 2009036814 | A1 | 26 March 2009 | ES | 2332077 | A1 | 25 January 2010 |
| | | | | EP | 2203988 | A1 | 07 July 2010 |
| | | | | US | 8310980 | B2 | 13 November 2012 |
| | | | | US | 2010303002 | A1 | 02 December 2010 |
| | | | | ES | 2332077 | B1 | 22 October 2010 |
| | | | | EP | 2203988 | B1 | 08 June 2011 |
| CN | 102792605 | A | 21 November 2012 | US | 8467469 | B2 | 18 June 2013 |
| | | | | US | 2011216846 | A1 | 08 September 2011 |
| | | | | WO | 2011111975 | A2 | 15 September 2011 |
| | | | | CN | 102792605 | B | 22 April 2015 |
| | | | | WO | 2011111975 | A3 | 12 January 2012 |
| | | | | EP | 2545657 | A2 | 16 January 2013 |
| | | | | EP | 2545657 | A4 | 17 May 2017 |
| | | | | KR | 101276855 | B1 | 18 June 2013 |
| | | | | KR | 20110102169 | A | 16 September 2011 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010732077